# EUROPÄISCHE PATENTSCHRIFT

(11) **EP 1 166 047 B1**
(45) Veröffentlichungstag und Bekanntmachung des Hinweises auf die Patenterteilung: **11.06.2003**
(21) Anmeldenummer: 00920553.5
(22) Anmeldetag: 22.03.2000
(51) Int. Cl.: G01D 5/244

(54) **VERFAHREN UND SCHALTUNGSANORDNUNG ZUR KORREKTUR VON PERIODISCHEN SIGNALEN EINES INKREMENTALEN POSITIONSMESSSYSTEMS**
METHOD AND CIRCUIT FOR CORRECTING PERIODIC SIGNALS OF AN INCREMENTAL POSITION MEASURING SYSTEM
PROCEDE ET CIRCUIT POUR LA CORRECTION DE SIGNAUX PERIODIQUES D'UN SYSTEME DE MESURE DE POSITION INCREMENTIEL

(30) Priorität: 30.03.1999 DE 19914388
(43) Veröffentlichungstag der Anmeldung: 02.01.2002
(73) Patentinhaber: Dr. Johannes Heidenhain GmbH, 83292 Traunreut (DE)
(72) Erfinder: BURGSCHAT, Reiner, D-07745 Jena (DE); KRAUSS, Mathias, D-72119 Ammerbuch (DE)
(86) Internationale Anmeldenummer: EP0002576
(87) Internationale Veröffentlichungsnummer: WO00060314

(56) Entgegenhaltungen:
- EP-A- 0 489 936
- DE-A- 19 712 622
- PATENT ABSTRACTS OF JAPAN vol. 015, no. 099 (P-1177), 11. März 1991 (1991-03-11) & JP 02 309280 A (NEC CORP), 25. Dezember 1990 (1990-12-25)

## Beschreibung

Die vorliegende Erfindung betrifft ein Verfahren sowie eine Schaltungsanordnung zur Korrektur von periodischen Signalen eines inkrementalen Positionsmesssystems.

Inkrementale Positionsmesssysteme liefern bei der Abtastung einer Messteilung ausgangsseitig üblicherweise ein Paar phasenversetzter, sinusförmiger Signale. Die Weiterverarbeitung dieser periodischen Signale erfolgt in einer nachgeordneten Folgeelektronik, beispielsweise in einer numerischen Werkzeugmaschinensteuerung. Die Folgeelektronik setzt bei der Weiterverarbeitung der Signale, beispielsweise bei der Signal-Interpolation, eine ideale Signalform der gelieferten Signale des Positionsmesssystems voraus; insbesondere wird dabei von gleichbleibenden Signal-Amplituden, einem möglichst geringen Signal-Offset sowie von einem exakten 90°-Phasenversatz zwischen den periodischen Signalen ausgegangen. In der Regel liefert das jeweilige Positionsmesssystem jedoch keine derart optimale Signalform, d.h. die erzeugten Signale sind aufgrund verschiedenster Einflüsse üblicherweise fehlerbehaftet bzgl. der Signalparameter Signal-Amplitude, Signal-Offset und Signal-Phasenlage. Zur messsystemseitigen Korrektur dieser Fehler bzw. zur Ausregelung dieser Fehler wurden bereits eine Reihe von Lösungen vorgeschlagen, die nachfolgend kurz diskutiert seien.

Aus der EP 708 311 A2 ist eine Schaltungsanordnung zur Korrektur von Sinussignalen, die eine Positionsinformation beinhalten, bekannt. Dabei werden die Gleichanteile, das Spannungsverhältnis der Sinussignale zueinander und die Phasendifferenz durch eine prozessorgesteuerte Anordnung korrigiert. Hierfür werden die Punkte der Sinussignale ausgewählt, an denen sie sich schneiden und an denen sie die maximale Amplitude aufweisen. Aus diesen Punkten der Signalverläufe der Sinussignale werden der Gleichanteil in den Sinussignalen berechnet und gegebenenfalls korrigiert; weiterhin wird daraus das Spannungsverhältnis der beiden Sinusspannungen zueinander berechnet und gegebenenfalls korrigiert. Schliesslich wird aufgrund dieser Punkte noch die Phasendifferenz zwischen den Sinussignalen berechnet und korrigiert. Die genannten Berechnungen und Korrekturen erfolgen dabei prozessorgesteuert.
Dabei ist von Nachteil, dass eine relativ komplexe und damit teure Schaltungsanordnung zur Durchführung der drei Korrekturmassnahmen erforderlich ist, insbesondere ein separater Prozessor. Neben den Kosten ist weiterhin der nicht unerhebliche Platzbedarf nachteilig, der für die Schaltungsanordnung benötigt wird, da die Schaltungsanordnung vorteilhaft unmittelbar am Messsystem angeordnet wird.

Aus der DE 196 43 771 A1 ist ein Verfahren und eine Vorrichtung zur Korrektur von Signalen eines Kodierers bekannt. Dabei werden sinusförmige Signale simuliert und deren Amplitude aus der Differenz zwischen Maximalund Minimalwert bestimmt. Es wird dann eine optimale Bezugsspannung für einen A/D-Wandler oder eine optimale Bezugsspannung und ein optimaler Verstärkungsfaktor für einen Verstärker entsprechend der Amplitude des simulierten Signals bestimmt. Schliesslich werden diese ermittelten optimalen Werte eingestellt. Hierbei wird ein Prozessor zur Ermittlung der optimalen Bezugsspannung und evtl. eines optimalen Verstärkungsfaktors benötigt. Dabei ist wiederum von Nachteil, dass ein Prozessor zur Ermittlung optimaler Werte benötigt wird. Weiterhin werden die optimalen Werte nur für bestimmte Positionen berechnet und nicht permanent nachgeregelt, weshalb während dem Betrieb zwangsläufig auch suboptimale Werte eingestellt sind.

Aus der EP 489 936 A1 ist bereits ein Verfahren und eine Schaltungsanordnung zur Detektion von Amplituden- und Offsetfehlern bei zwei um 90° versetzten Sinussignalen sowie ein Regler dafür bekannt. Es werden beide Signale in Schwellwertstufen bewertet. Der Zeitpunkt der Bewertung wird dabei durch den Nulldurchgang des jeweils anderen Signals definiert. Die Ausgangssignale der Schwellwertstufen werden in einem Steuerwerk bewertet und entsprechend den dabei ermittelten Fehlern Offset und Amplitude eingestellt.
Bei dieser Realisierung ist von Nachteil, dass lediglich eine einstufige Regelung möglich ist. Daher kann entweder eine grosse Amplitudenschwankung eines der Sinussignale nicht schnell genug ausgeregelt werden oder bei einer kleinen Amplitudenschwankung kann ein Überschwingen der Regelung nicht verhindert werden. Weiterhin ist ein Steuerwerk erforderlich, das in der Regel durch einen Prozessor realisiert wird, welcher einen erheblichen Kostenaufwand darstellt und einen erheblichen Platzbedarf hat.

Es ist daher die Aufgabe der vorliegenden Erfindung ein Verfahren zur Korrektur periodischer Signale eines inkrementalen Positionsmesssystems anzugeben. Dabei sollen Signal-Parameter der periodischen Signale wie Signal-Amplitude, Signal-Offset und Signal-Phasenlage wahlweise korrigierbar sein. Gefordert ist insbesondere, dass sowohl geringe als auch starke Schwankungen der jeweiligen Signalparameter ausregelbar sind und ein Überschwingen der Regelung möglichst vermieden wird.

Ferner ist Aufgabe der vorliegenden Erfindung, eine Schaltungsanordnung zur Korrektur periodischer Signale eines inkrementalen Positionsmesssystems anzugeben, die möglichst kostengünstig und kompakt realisierbar ist.

Diese Aufgaben werden durch ein Verfahren mit den Merkmalen des Anspruchs 1 und durch eine Schaltungsanordnung mit den Merkmalen des Anspruchs 15 gelöst.

Vorteilhafte Ausgestaltungen der vorliegenden Erfindung sind den abhängigen Ansprüchen zu entnehmen.

Das erfindungsgemässe Verfahren weist den Vorteil auf, dass sowohl geringfügige als auch starke Schwankungen von Signalparametern der periodischen Signale des Positionsmesssystems ohne Überschwingungen ausgeregelt werden, beispielsweise unterschiedlich starke Amplitudenschwankungen. Geringfügige Schwankungen des Signalparameters Signalamplitude können etwa im normalen Messbetrieb durch langsame Driftvorgänge verursacht werden, während starke Amplitudenschwankungen durch eine Verschmutzung der abgetasteten Messteilung bedingt sind. In beiden Fällen stellt das erfindungsgemässe Verfahren eine zuverlässige Korrektur der an die Folgeelektronik übertragenen Signale sicher.

Die erfindungsgemässe Schaltungsanordnung weist den Vorteil auf, dass sowohl eine langsame Schwankung als auch eine schnelle Änderung in den Signalen, beispielsweise bzgl. des Signalparameters Signalamplitude, mit nur einer Schaltungsanordnung ausgeregelt werden kann.

Ein weiterer Vorteil besteht in der Unempfindlichkeit der erfindungsgemässen Schaltungsanordnung gegenüber Störungen, die den Signalen des Positionsmesssystems überlagert sind. Dies wird im Fall der Amplitudenkorrektur dadurch erreicht, dass nur während eines sehr kurzen Zeitraums die Amplitude der Signale des Positionsmesssystems betrachtet wird, um anschliessend einen eventuell vorliegenden Fehler auszuregeln. Alle Störungen, die nicht in diesem Zeitintervall liegen, können die Korrektur bzw. Regelung nicht beeinflussen.

Grundsätzlich kann im Rahmen der vorliegenden Erfindung je nach Anwendungsfall vorgesehen werden, nur einen Teil der oben diskutierten Signalfehler zu korrigieren bzw. die entsprechenden Signalparameter einzuregeln; beispielsweise kann auf erfindungsgemässe Art und Weise die Korrektur bzw. Regelung der Signal-Amplitude und des Signal-Offsets erfolgen, während auf eine Korrektur eventueller Phasenlagefehler verzichtet wird etc.. Die vorliegende Erfindung lässt sich somit flexibel an die jeweiligen Anforderungen hinsichtlich der Signalqualität anpassen.

Weiterhin ist aufzuführen, dass die erfindungsgemäße Schaltungsanordnung lediglich einen geringen schaltungstechnischen Aufwand erfordert, gleichzeitig aber eine schnelle und zuverlässige Signalkorrektur gewährleistet ist. Insbesondere erfordert die erfindungsgemäße Schaltungsanordnung hierbei keine schaltungstechnisch aufwendige Detektion von Signal-Spitzenwerten.

Weitere Vorteile sowie Einzelheiten des erfindungsgemässen Verfahrens und der erfindungsgemässen Schaltungsanordnung ergeben sich aus der nachfolgenden Beschreibung von Ausführungsbeispielen anhand der Zeichnungen.

Dabei zeigt
- Figur 1: ein Flussdiagramm zur grundsätzlichen Erläuterung des erfindungsgemässen Verfahrens;
- Figur 2a: ein erstes Ausführungsbeispiel einer erfindungsgemässen Schaltungsanordnung, geeignet zur Amplituden- und Offset-Korrektur für ein erstes, als Differenzsignal übertragenes periodisches Signal eines inkrementalen Positionsmesssystems;
- Figur 2b: eine Ergänzung des ersten Ausführungsbeispieles aus Figur 1a für ein zweites, phasenversetztes Ausgangssignal;
- Figur 3: ein schematisiertes Schaltbild einer ersten möglichen Anordnung von erfindungsgemäss betriebenen Stellgliedern im Signalweg eines inkrementalen Positionsmesssystems;
- Figur 4a - 4f: verschiedene Signale aus dem ersten Ausführungsbeispiel der erfindungsgemässen Schaltungsanordnung;
- Figur 5: ein zweites Ausführungsbeispiel einer erfindungsgemässen Schaltungsanordnung, geeignet zur Phasenlage-Korrektur für mehrere periodische Signale eines inkrementalen Positionsmesssystems;
- Figur 6a und 6b: je ein schematisiertes Schaltbild einer zweiten möglichen Anordnung von erfindungsgemäss betriebenen Stellgliedern in den Signalkanälen eines inkrementalen Positionsmesssystems;
- Figur 7a - 7c: verschiedene Signale aus dem zweiten Ausführungsbeispiel der erfindungsgemässen Schaltungsanordnung.

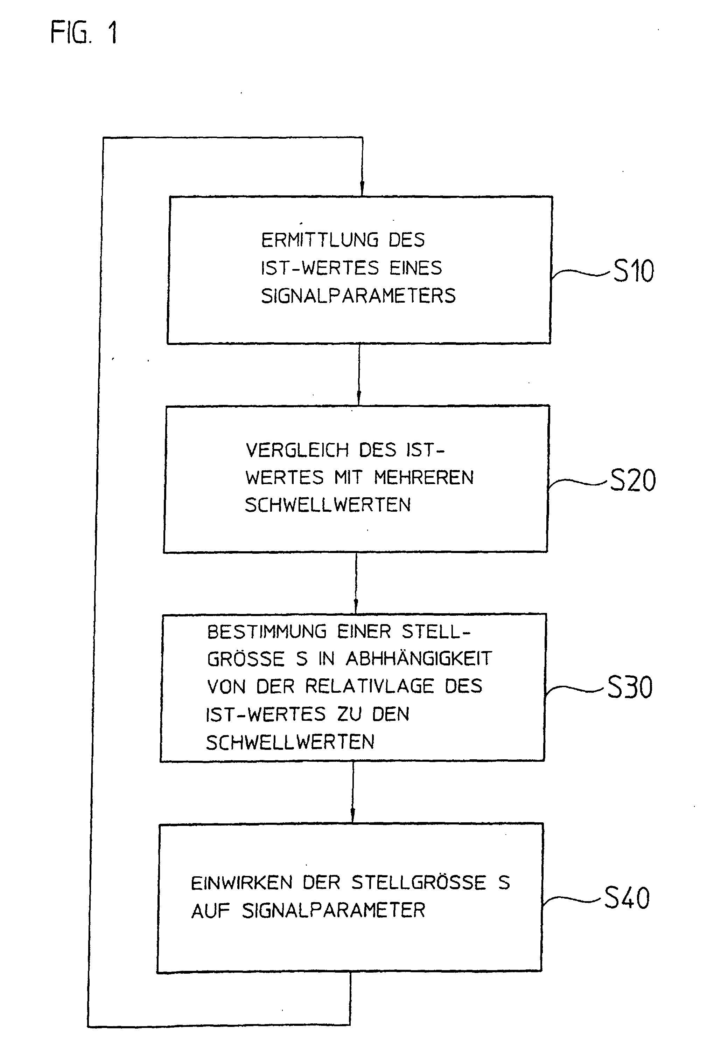

Anhand des Flussdiagrammes in Figur 1 wird nachfolgend das erfindungsgemässe Verfahren grundsätzlich erläutert. Ausgegangen sei beim beschriebenen Verfahren von einem inkrementalen Positionsmesssystem, bestehend aus einer periodischen Messteilung und einer relativ hierzu beweglichen Abtasteinheit. Im Fall der Relativbewegung von Messteilung und Abtasteinheit resultieren verschiebungsabhängig modulierte, periodische Signale, die zur Weiterverarbeitung an eine nachgeordnete Folgeelektronik übertragen werden. Die Relativbewegung kann hierbei in Form einer Linearbewegung als auch in Form einer rotatorischen Bewegung vorgesehen sein.

Üblicherweise handelt es sich bei den erzeugten Signalen um ein Paar sinusförmiger Analogsignale, die einen Phasenversatz von 90° zueinander aufweisen. Ein derartiges Positionsmesssystem kann etwa zur präzisen Bestimmung der Relativposition von Werkzeug und Werkstück in einer numerisch gesteuerten Werkzeugmaschine eingesetzt werden; als Folgeelektronik fungiert in diesem Fall die numerische Werkzeugmaschinensteuerung. Grundsätzlich können derartige Positionsmesssysteme auf verschiedensten physikalischen Abtastprinzipien basieren, beispielsweise auf photoelektrischem, magnetischem, induktivem oder kapazitivem Prinzip. Selbstverständlich ist die vorliegende Erfindung in Verbindung mit all diesen Abtastprinzipien einsetzbar.

Über das nachfolgend erläuterte, erfindungsgemässe Verfahren wird nunmehr sichergestellt, dass an die Folgeelektronik stets hinreichend optimierte Signale zur Weiterverarbeitung übertragen werden, wobei die jeweilige Optimierung gezielt hinsichtlich bestimmter Signalparameter erfolgt. Als kritische bzw. zu optimierende Signalparameter der periodischen Signale seien insbesondere die Signal-Amplitude, der Signal-Offset sowie die oben erwähnte relative Phasenlage aufgeführt.

In einem ersten Schritt S10 des erfindungsgemässen Verfahrens wird der aktuelle Ist-Wert von mindestens einem der verschiedenen Signalparameter vorzusgweise innerhalb einer Signalperiode ermittelt. Im nachfolgenden Schritt S20 erfolgt ein Vergleich des ermittelten Ist-Wertes mit ein oder mehreren vorgegebenen Schwellwerten. Hierbei erfolgt in diesem Schritt S20 eine Bewertung des jeweiligen Ist-Wertes in Bezug auf die Relativlage zu dem bzw. den verschiedenen Schwellwerten. Es wird demzufolge bewertet, ob der jeweilige Ist-Wert des Signal-Parameters größer oder kleiner als bestimmte Schwellwerte ist. An dieser Stelle ist somit insbesondere keine schaltungstechnisch aufwendige Spitzenwertdetektion erforderlich. Je nach Relativlage des Ist-Wertes wird im nachfolgenden Verfahrenschritt S30 eine Stellgröße bestimmt, die im Verfahrensschritt S40 auf die periodischen Signale einwirkt, um diese in Richtung eines vorgegebenen Sollwertes einzuregeln. Anschließend erfolgt wiederum gemäß dem Verfahrensschritt S10 die Ermittlung des Ist-Wertes des Signalparameters in einer nachfolgenden Signalperiode, um ggf. weiter auf den jeweiligen Signalparameter einzuwirken, bis dieser den gewünschten Sollwert aufweist bzw. zumindest in einem bestimmten Sollbereich liegt usw..

Für die im Verfahrensschritt S30 bestimmte Stellgröße S stehen mindestens zwei vorgegebene, verschiedene Stellgrößen S_{N} (z.B. N = 1...4) zur Verfügung. Die verschiedenen Stellgrößen S_{N} sind jeweils eindeutig einer bestimmten Relativlage des Ist-Wertes des Signal-Parameters in Bezug auf die vorgegebenen Schwellwerte zugeordnet und sind im Hinblick auf ihr jeweiliges Vorzeichen sowie ihren Betrag vorgegeben. Die mindestens zwei Stellgrößen S unterscheiden sich betrags- und/oder vorzeichenmäßig. Vorteilhafterweise stehen vier Stellgrößen zur Verfügung, von denen sich zwei betragsmäßig deutlich voneinander unterscheiden; jede der betragsmäßig unterschiedlichen Stellgrößen hat ferner eine korrespondierende Stellgröße mit umgekehrtem Vorzeichen. Derart ist sichergestellt, dass auf unterschiedlich starke Schwankungen des jeweiligen Signalparameters regelungsseitig geeignet reagiert werden kann. Sollen etwa auf diese Art und Weise die Signalparameter Signal-Amplitude und Signal-Offset korrigiert werden, so können verschiedene Ursachen zu einer unerwünschten Veränderung dieser Signalparameter führen. Beispielsweise kann ein langsames Driften der Signalamplitude ebenso vorliegen, wie ein deutlicher Signalamplitudeneinbruch im Fall einer Verschmutzung der Messteilung. Während im ersten Fall über das erfindungsgemässe Verfahren eine kleinere Stellgröße S für den Regelungsschritt S40 bestimmt wird, erfolgt im zweiten Fall die Selektion der grösseren Stellgröße etc..

Als vorteilhaft erweist sich beim erfindungsgemässen Verfahren weiterhin, wenn im Verfahrensschritt S10 die Bestimmung des jeweiligen Signalparameter-Ist-Wertes innerhalb eines kleinen Zeitfensters erfolgt, vorzusgweise innerhalb einer Signalperiode. Dadurch können Störungen weitgehend ausgeschlossen werden, die ggf. die Regelung beeinflussen könnten.

Ebenso wird dann mit Hilfe der bestimmten Stellgröße S regelungstechnisch im Schritt S40 lediglich in einem kleinen Zeitfenster reagiert, etwa über eine begrenzte Anzahl von Signalperioden hinweg.

Desweiteren ist vorteilhaft, wenn eine ggf, erforderliche Änderung der aktuellen Stellgröße S lediglich zu Zeitpunkten erfolgt, in denen ein Nulldurchgang des periodischen Signales vorliegt, d.h. wenn die Amplitude des periodischen Signales Null oder zumindest annähernd Null ist.

Hinsichtlich konkreter Ausführungsformen und weiterer vorteilhafter Details des erfindungsgemässen Verfahrens sowie erfindungsgemässer Schaltungsanordnungen sei auf die nachfolgende detaillierte Beschreibung mehrerer Ausführungsbeispiele in den weiteren Figuren verwiesen.

Im folgenden, ersten Ausführungsbeispiel einer erfindungsgemässen Schaltungsanordnung werden lediglich die Signalparameter Signal-Amplitude und Signal-Offset in den Signalen eines inkrementalen Positionsmesssystems korrigiert. Das erste Ausführungsbeispiel einer erfindungsgemäßen Schaltungsanordnung ist hierbei zur Durchführung des oben erläuterten Verfahrens geeignet. Im Hinblick auf die Korrektur des Signal-Parameters Signal-Phasenlage sei auf die später folgende Beschreibung eines zweiten Ausführungsbeispieles verwiesen.

In der ersten Variante einer erfindungsgemässen Schaltungsanordnung wird davon ausgegangen, dass das Positionsmesssystem als Ausgangssignale ein sinusförmiges und ein um 90° verschobenes sinusförmiges, also cosinusförmiges Signal ausgibt. Die Ausgangssignale sin, cos des Positionsmesssystems werden jeweils über zwei Leitungen als Differenzsignale übertragen. Daraus können dann die jeweils invertierten Signale -sin, -cos einfach erzeugt werden, falls diese nicht ohnehin bereits vorhanden sind.

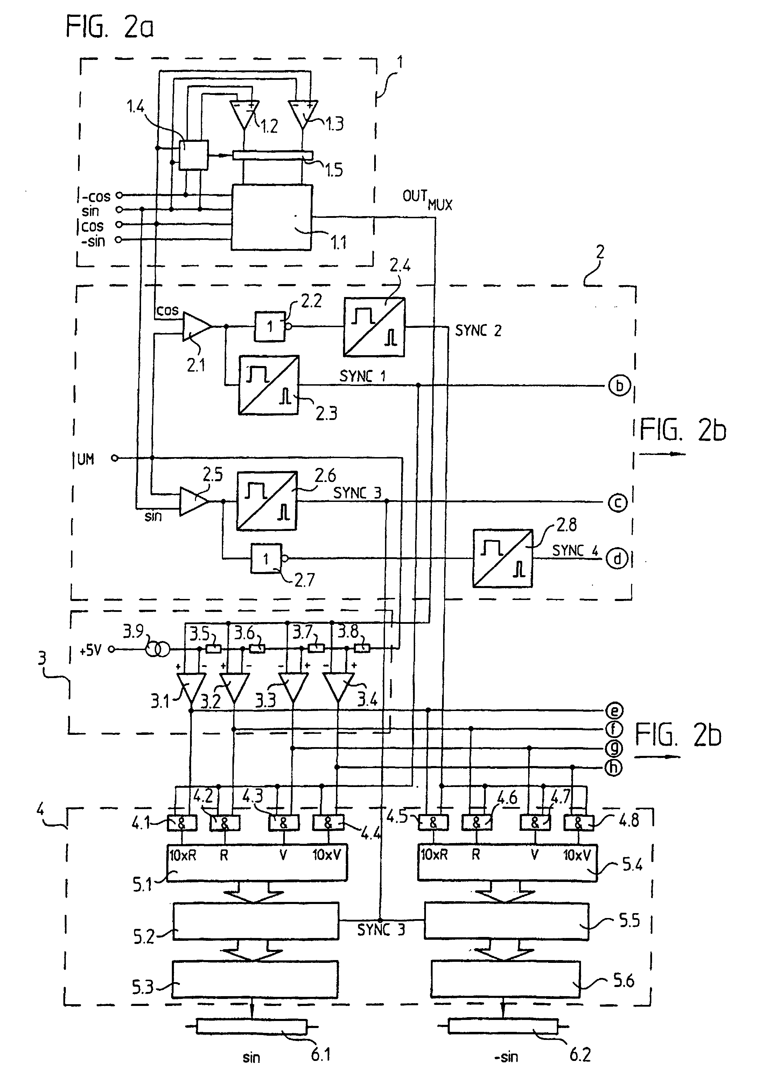

Figur 2a zeigt ein erstes Ausführungsbeispiel der erfindungsgemässen Schaltungsanordnung, der ein Sinussignal sin, ein Cosinussignal cos sowie ein invertiertes Sinussignal -sin und ein invertiertes Cosinussignal -cos zugeleitet werden, die in bekannter Art und Weise vom inkrementalen Messsystem erzeugt werden. Diese Signale sin, cos, -sin, -cos werden in einer ersten Baugruppe 1 den Eingängen eines Multiplexers 1.1 zugeleitet. Die Steuerung des Multiplexers 1.1 erfolgt abhängig von der Bewegungsrichtung des Messsystems durch die Auswertung der Eingangssignale sin, -sin, cos, - cos mittels Komparatoren 1.2 und 1.3. Im einzelnen wird einem ersten Komparator 1.2 auf seinen invertierenden Eingang das Sinussignal sin und auf seinen nichtinvertierenden Eingang das invertierte Cosinussignal -cos zugeleitet. Einem zweiten Komparator 1.3 in der ersten Baugruppe 1 wird auf seinen invertierenden Eingang ebenfalls das Sinussignal sin und auf seinen nichtinvertierenden Eingang das Cosinussignal cos zugeleitet. Die Ausgangssignale der beiden Komparatoren 1.2, 1.3 werden zur Steuerung des Multiplexers 1.1 derart verwendet, dass das Ausgangssignal des ersten Komparators 1.2 im Multiplexer 1.1 als niederwertiges Adressbit zur Auswahl eines der Eingangssignale und das Ausgangssignal des zweiten Komparators 1.3 als höherwertiges Adressbit zur Auswahl eines der Eingangssignale benutzt wird. Wird dem Eingang des Multiplexers 1.1 mit der Adresse 0 das invertierte Cosinussignal cos, dem Eingang mit der Adresse 1 das Sinussignal sin, dem Eingang mit der Adresse 2 das Cosinussignal cos und dem Eingang mit der Adresse 3 das invertierte Sinussignal -sin zugeleitet, dann wird vom Multiplexer 1.1 jeweils dasjenige Eingangssignal als Ausgangssignal OUT_{MUX} ausgegeben, welches gerade die maximale Amplitude aufweist. Dies gilt für eine erste Bewegungsrichtung auf Seiten des Positionsmesssystems.

Ändert sich die Bewegungsrichtung auf Seiten des Positionsmesssystems, wird dies in einem Richtungsdetektor 1.4 erkannt, der beispielsweise in bekannter Art und Weise das sinus- und cosinusförmige Ausgangssignal des Positionsmesssystems auswertet. Der Richtungsdetektor 1.4 steuert dann einen weiteren Multiplexer 1.5 an, der die Ausgangssignale der Komparatoren 1.2 und 1.3 derart mit den Steuereingängen des Multiplexers 1.1 verbindet, dass auch bei geänderter Bewegungsrichtung dasjenige Eingangssignal sin, cos, -sin, -cos als Ausgangssignal OUT_{MUX} durch den Multiplexer 1.1 weitergeleitet wird, welches gerade die maximale Amplitude aufweist. Durch den Richtungsdetektor 1.4 und den Multiplexer 1.5 wird somit sichergestellt, dass unabhängig von der Bewegungsrichtung auf Seiten des Positionsmesssystems immer diejenige Halbwelle der Eingangssignale sin, cos, -sin, -cos als Ausgangssignal OUT_{MUX} weitergeleitet wird, welche gerade die maximale Amplitude aufweist.

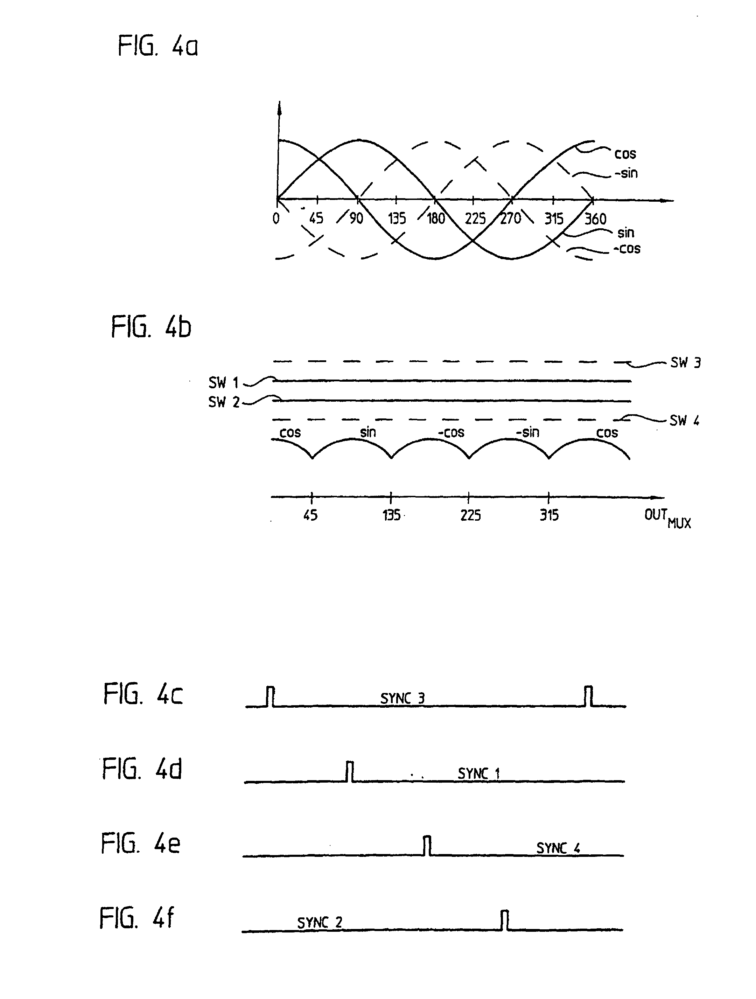

Der Zusammenhang zwischen den vier Eingangssignalen sin, cos, -sin, cos und den über den Multiplexer 1.1 erzeugten Ausgangsisgnale OUT_{MUX} ist in den Figuren 4a und 4b graphisch dargestellt.

Alternativ könnte der Multiplexer 1.5 auch vor dem Multiplexer 1.1 angeordnet sein, wodurch die Ausgangssignale sin, cos, -sin, -cos des Positionsmesssystems derart den Eingängen des Multiplexers 1.1 zugeleitet werden, dass durch den Multiplexer 1.1 unabhängig von der Bewegungsrichtung immer dasjenige Eingangssignal als Ausgangssignal OUT_{MUX} ausgegeben wird, welches gerade eine maximale Amplitude aufweist.

In einer weiteren alternativen Ausgestaltung kann der Multiplexer 1.5 abhängig von der Bewegungsrichtung auch die an die Synchronisationsbaugruppe 2 weitergeleiteten sinus- und cosinusförmigen Signale im Vorzeichen vertauschen. Dadurch wird in einer ersten Bewegungsrichtung das Cosinussignal cos dem Komparator 2.1 und das Sinussignal sin dem Komparator 2.5 zugeleitet. In einer zweiten Bewegungsrichtung wird, umgeschaltet durch den Multiplexer 1.5, das Sinussignal -sin dem Komparator 2.5 und das Cosinussignal -cos dem Komparator 2.1 zugeleitet.

Das derart erzeugte Ausgangssignal OUT_{MUX} des Multiplexers 1.1 bzw. der ersten Baugruppe 1 wird vier Komparatoren 3.1, 3.2, 3.3 und 3.4 zugeleitet, die einer zweiten Baugruppe 3 zugeordnet sind. Einem ersten und einem zweiten Komparator 3.1 und 3.2 wird das Ausgangssignal OUT_{MUX} des Multiplexers 1.1 jeweils auf den nichtinvertierenden Eingang zugeleitet; einem dritten und vierten Komparator 3.3 und 3.4 wird das Ausgangssignal OUT_{MUX} des Multiplexers 1.1 auf den invertierenden Eingang zugeleitet. Die zweiten Eingänge der Komparatoren 3.1 bis 3.4 werden jeweils mit einem Abgriff eines Spannungsteilers verbunden, der ebenfalls zur zweiten Baugruppe 3 gehört.

Der Spannungsteiler, bestehend aus einer Stromquelle 3.9 und vier Widerständen 3.5 bis 3.8, ist derart ausgestaltet, dass vor dem Widerstand 3.5, zwischen den Widerständen 3.5 und 3.6, 3.6 und 3.7 und zwischen den Widerständen 3.7 und 3.8 jeweils ein Abgriff vorgesehen ist. Die Widerstände 3.5 bis 3.8 sind derart gewählt, dass die Spannung an den Abgriffen jeweils als Schwellspannung für die nachfolgend noch detailliert erläuterte Regelung verwendet werden kann; derart werden somit die bereits oben erwähnten, verschiedenen Schwellwerte SW1 - SW4 vorgegeben. Der invertierende Eingang des ersten Komparators 3.1 wird hierzu mit dem ersten Abgriff vor Widerstand 3.5 verbunden. Der invertierende Eingang des zweiten Komparators 3.2 wird mit dem Abgriff zwischen den Widerständen 3.5 und 3.6 verbunden; der nichtinvertierende Eingang des dritten Komparators 3.3 wird mit dem Abgriff zwischen den Widerständen 3.6 und 3.7 verbunden und der nichtinvertierende Eingang des vierten Komparators 3.4 wird mit dem Abgriff zwischen den Widerständen 3.7 und 3.8 verbunden.

Alternativ zum dargestellten Ausführungsbeisiel eines Spannungsteilers mit fest vorgegebenen Widerständen respektive Schwellwerten, kann auch vorgesehen werden, die verschiedenen Schwellwerte einstellbar auszulegen. Dies kann etwa durch eine entsprechende Anordnung mit mehreren umschaltbaren Widerständen realisiert werden. Auf diese Art und Weise lässt sich die vorliegende Erfindung vorteilhaft an verschiedene Abtastverfahren anpassen. Über die jeweiligen Schwellwerte lässt sich in Verbindung mit den Schrittweiten der Stellglieder die gewünschte Regelungs-Steilheit und die Regelungs-Geschwindigkeit einstellen; es lässt sich somit beeinflussen, welche Signaländerungen von Signalperiode zu Signalperiode ausgeregelt werden können.

Die Ausgangssignale der vier Komparatoren 3.1 bis 3.4 werden anschließend in einer dritten Baugruppe 4 ersten Eingängen von zwei Gruppen aus je vier UND-Gattern 4.1 bis 4.4 und 4.5 bis 4.8 zugeleitet. Den zweiten Eingängen der ersten Gruppe von UND-Gattern 4.1 bis 4.4 wird ein erstes Synchronisationssignal SYNC1 zugeleitet. Durch das Synchronisationssignal SYNC1 werden die UND-Gatter 4.1 bis 4.4 der ersten Gruppe dann freigegeben, wenn das cosinusförmige Eingangssignal cos eine minimale Amplitude nahe Null aufweist. Die Freigabe dauert so lange, wie der mit den UND-Gattern 4.1 bis 4.4 verbundene erste Vorwärts-Rückwärts-Zähler 5.1 benötigt, um die Ausgangssignale der UND-Gatter 4.1 bis 4.4 zu übernehmen.

Das Ausgangssignal des ersten Komparators 3.1 wird, synchronisiert durch das erste UND-Gatter 4.1, einem ersten Zählereingang 10xR eines Zählers 5.1 zugeleitet, der den Zähler 5.1 derart steuert, dass dieser in einer ersten Schrittweite rückwärts zählt. Der Zähler 5.1. ist somit wie die weiteren Zähler 5.4, 5.7, 5.10 in bekannter Art und Weise als Vorwärts-Rückwärts-Zähler ausgebildet; die verschiedenen Zählereingänge fungieren als Steuereingänge, d.h. je nach beaufschlagtem Zählereingang wird mit einer bestimmten Schrittweite in eine bestimmte Richtung gezählt. Die erste Schrittweite des Zählers 5.1 wird derart gewählt, dass auch starke Amplitudenschwankungen der Signale des Positionmesssystems über eine geeignete Regelung möglichst schnell ausgeglichen werden können.

Das Ausgangssignal des zweiten Komparators 3.2 wird, synchronisiert durch das zweite UND-Gatter 4.2, einem zweiten Zählereingang R des Zählers 5.1 zugeleitet, wodurch der Zähler 5.1 derart gesteuert wird, dass dieser in einer zweiten, kleineren Schrittweite rückwärts zählt. Die zweite, kleinere Schrittweite des Zählers 5.1 wird derart gewählt, dass langsame Signaldriften im normalen Betrieb des Messsystems über eine geeignete Regelung ohne Überschwingungen ausgeglichen werden.

Das Ausgangssignal des dritten Komparators 3.3 wird, synchronisiert durch das dritte UND-Gatter 4.3, einem dritten Zählereingang V des Zählers 5.1 zugeleitet, welcher in einer zweiten Schrittweite vorwärts zählt. Schliesslich wird noch das Ausgangssignal des vierten Komparators 3.4, synchronisiert durch das vierte UND-Gatter 4.4 einem vierten Zählereingang 10xV des Zählers 5.1 zugeleitet, der den Zähler 5.1 derart steuert, dass dieser in einer ersten Schrittweite vorwärts zählt.

Die verschiedenen UND-Gatter 4.1 - 4.4 in der dritten Baugruppe 4 dienen somit zum selektiven Zuführen von Signalen auf bestimmte Zählereingänge R, V, 10R, 10V des Zählers 5.1. Das Zuführen der Signale auf die verschiedenen Zählereingänge R, V, 10R, 10V erfolgt hierbei in Abhängigkeit der vorher durchgeführten Vergleichsoperationen, d.h. die verschiedenen Zählereingänge R, V, 10R, 10V werden in Abhängigkeit von den Ausgangssignalen der Komparatoren 3.1 - 3.4 entsprechend des Ist-Wertes des Signal-Parameters im Vergleich mit den vorgegebenen Schwellwerten SW1 - SW4 beaufschlagt. Auf diese Art und Weise wird je nach Ergebnis der Vergleichsoperation die jeweilige Zähler-Schrittweite und damit letztlich die aktuelle Stellgröße für die Regelung des Signalparameters eingestellt.

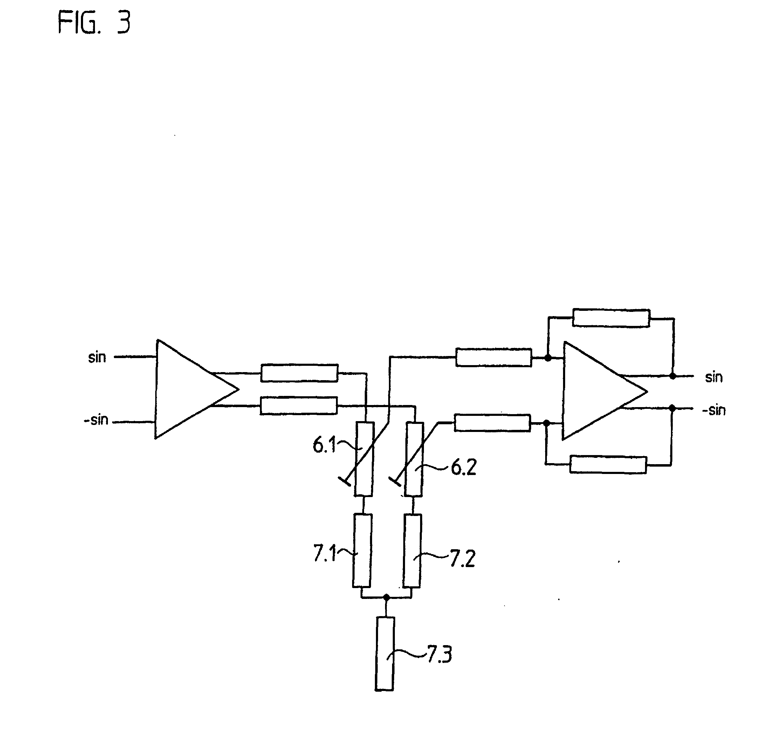

Das jeweilige aktuelle Zählergebnis des Zählers 5.1 wird einem Zwischenspeicher 5.2 zugeleitet. Weiterhin wird dem Zwischenspeicher 5.2 ein drittes Synchronisationssignal SYNC3 zugeleitet. Aus dem Zwischenspeicher 5.2 wird das Zählergebnis bzw. der Zählerstand zu Zeitpunkten, die durch das dritte Synchronisationssignal SYNC3 bestimmt sind, an einen nachgeordneten Decoder 5.3 ausgegeben. Mit Hilfe des Decoders 5.3 wird ein Stellglied einer Regelung in Form eines veränderbaren Widerstandes 6.1 eingestellt. Über die definierte Veränderung des Widerstandes 6.1 wird dann letztlich regelungstechnisch die Signal-Amplitude und ggf. der Signal-Offset des vom Positionsmesssystem ausgegebenen Signales sin verändert. In Bezug auf die Anordnung des Widerstandes 6.1 im Signalweg des Positionsmesssystems sei auf die noch folgende Beschreibung der Figur 3 verwiesen.

Die zweite Gruppe UND-Gatter 4.5 bis 4.8 in der dritten Baugruppe 4 ist mit einem zweiten Zähler 5.4 verbunden. Die Ausgangssignale der Komparatoren 3.1 bis 3.4 aus der zweiten Baugruppe 3 bilden jeweils auch ein Eingangssignal für die UND-Gatter 4.5 bis 4.8. Das zweite Eingangssignal der UND-Gatter 4.5 bis 4.8 wird durch ein zweites Synchronisationssignal SYNC2 realisiert. Das zweite Synchronisationssignal SYNC2 gibt die UND-Gatter 4.5 bis 4.8 zur Weiterleitung des Ausgangssignals der Komparatoren 3.1 bis 3.4 immer dann frei, wenn das cosinusförmige Eingangssignal cos des Multiplexers 1.1 eine Amplitude nahe Null aufweist. Die Dauer der Freigabe wird wieder derart gewählt, dass der zweite Zähler 5.4 die Ausgangssignale der UND-Gatter 4.5 bis 4.8 übernehmen kann. Dabei wird das Ausgangssignal des ersten UND-Gatters 4.5 einem Zählereingang 10xR des zweiten Zählers 5.4 zugeleitet, der ein Rückwärtszählen in einer ersten Schrittweite steuert. Das Ausgangssignal des zweiten UND-Gatters 4.6 wird einem zweiten Zählereingang R des Zählers 5.4 zugeleitet, der ein Rückwärtszählen in einer zweiten, kleineren Schrittweite steuert. Das Ausgangssignal des dritten Komparators 3.3 wird einem dritten Zählereingang V des Zählers 5.4 zugeleitet, der ein Vorwärtszählen in einer zweiten, kleinen Schrittweite steuert. Schliesslich wird noch das Ausgangssignal des vierten UND-Gatters 4.8 der zweiten Gruppe dem vierten Zählereingang 10xV des Zählers 5.4 zugeleitet, so dass dieser derart gesteuert wird, dass er mit einer ersten, größeren Schrittweite vorwärts zählt.

Das Ausgangssignal des zweiten Zählers 5.4 in der dritten Baugruppe 4 wird einem zweiten Zwischenspeicher 5.5 zugeleitet. Dem zweiten Zwischenspeicher 5.5 wird ebenso wie dem ersten Zwischenspeicher 5.2 das dritte Synchronisationssignal SYNC3 zugeleitet. Dadurch gibt der zweite Zwischenspeicher 5.5 das Zählergebnis des zweiten Zählers 5.4 zum gleichen Zeitpunkt an einen zweiten Decoder 5.6 aus, wie der erste Zwischenspeicher 5.2. Durch den zweiten Decoder 5.6 wird ein zweites Stellglied, wiederum ausgebildet als veränderbarer Widerstand 6.2, in Abhängigkeit vom aktuellen Zählerstand eingestellt. Das zweite Stellglied wird wie der erste veränderbare Widerstand 6.1 dazu benutzt, den Signalparameter Signal-Amplitude und ggf. Signal-Offset eines der Ausgangssignale des Positionsmesssystems zu verändern; im vorliegenden Beispiel wird damit das an die Folgeelektronik übertragene Signal -sin entsprechend geregelt. Auch in diesem Zusammenhang sei auf die noch folgende Beschreibung der Figur 3 hingewiesen, die u.a. die Anordnung der verschiedenen Stellglieder bzw. der veränderbaren Widerstände 6.1, 6.2 im Signalweg zeigt.

Da die Ausgangssignale des Positionsmesssystems zur Verbesserung der Störunempfindlichkeit über zwei Leitungen als Differenzsignale übertragen werden, wie in Figur 3 dargestellt, werden mittels der Widerstände 6.1 und 6.2 bzw. mittels der entsprechenden Stellglieder auf den beiden Leitungen die Signal-Amplituden und der Signal-Offset der periodischen Signale sin, - sin des Positionsmesssystems eingestellt, die an die nachgeordnete Folgeelektronik übertragen werden. Neben den dargestellten veränderbaren Widerständen 6.1, 6.2 eignen sich selbstverständlich auch andere Bauelemente als Stellglieder einer entsprechenden Regelung, beispielsweise einstellbare Verstärker, MOS-Transistoren, bipolare Transistoren etc..

Auf die Erzeugung der verschiedenen Synchronisationssignale SYNC1, SYNC2, SYNC3, SYNC4 in einer vierten Baugruppe 3 und deren Funktion im vorliegenden Beispiel einer erfindungsgemäßen Schaltungsanordnung sei nachfolgend näher eingegangen. Zu den verschiedenen Synchronisationssignalen SYNC1 - SYNC4 und zum Zusammenhang mit den verschiedenen anderen Signalen sei ferner auf die Darstellung in den Figuren 4a - 4f verwiesen.

Grundsätzlich wird im vorliegenden Ausführungsbeispiel über die Synchronisationsignale SYNC1 - SYNC4 u.a. immer sichergestellt, dass die Ausgangssignale der Komparatoren 3.1 - 3.4 entsprechend den Eingangssignalen sin, cos, -sin, -cos auf die jeweiligen Zähler 5.1, 5.4 geschaltet werden. Die verschiedenen UND-Gatter haben dabei eine Sortierfunktion, so dass jedem Zähler 5.1, 5.4 immer Informationen bzgl. des gleichen Eingangssignales zugeführt werden.

Über den Multiplexer 1.1 werden die anliegenden Eingangssignale sin, cos, - sin, -cos zu einer Hüllkurve zusammengefasst, so dass stets alle Eingangssignale sin, cos, -sin, -cos durch die gleichen Komparatoren bewertet werden. Fehler unterschiedlicher Komparatoren wirken sich dadurch nicht als Signaldifferenz am Ausgang der Regelung aus. Die verschiedenen UND-Gatter verteilen die Ausgangssignale der Komparatoren schließlich wieder auf die den Eingangssignalen sin, cos, -sin, -cos zugeordneten Zähler.

Zur Erzeugung des in Figur 4d dargestellten ersten Synchronisationssignals SYNC1 für die erste Gruppe UND-Gatter 4.1 bis 4.4 wird das cosinusförmige Eingangssignal cos des Multiplexers 1.1 in einem Komparator 2.1 der vierten Baugruppe 2 mit seinem Gleichspannungsanteil UM verglichen. Das Ausgangssignals des Komparators 2.1 weist zunächst ein Tastverhältnis von 1:1 auf und wird in der vierten Baugruppe 2 anschliessend einem Impulsbreitenwandler 2.3 zugeleitet. Durch diesen wird das Tastverhältnis derart geändert, dass zu dem Zeitpunkt, zu dem das cosinusförmige Eingangssignal cos einen Wert aufweist, der der Mittenspannung UM entspricht, ein HIGH-Pegel durch den Impulsbreitenwandler 2.3 als Synchronisationssignal SYNC1 ausgegeben wird. Dadurch wird die Dauer des ursprünglich durch den Komparator 2.1 erzeugten HIGH-Impulses verringert. Der derart erzeugte HIGH-Impuls dient dann zur Synchronisation der Ausgangssignale der Komparatoren 3.1 bis 3.4 mittels der ersten Gruppe von UND-Gattern 4.1 bis 4.4.

Zur Erzeugung des in Figur 4f gezeigten, zweiten Synchronisationssignales SYNC2 wird in der vierten Baugruppe 2 das Ausgangssignal des Komparators 2.1 zusätzlich einem Inverter 2.2 zugeleitet. Anschliessend wird wieder das Tastverhältnis in einem Impulsbreitenwandler 2.4 derart verändert, dass zu dem Zeitpunkt, zu dem das cosinusförmige Eingangssignal cos einen Wert aufweist, der der Mittenspannung UM entspricht, ein HIGH-Pegel durch den Impulsbreitenwandler 2.4 ausgegeben wird. Dadurch wird die Breite des HIGH-Pegels des Ausgangssignals von Inverter 2.2 verringert. Das Ausgangssignal des Impulsbreitenwandler 2.4 wird als zweites Synchronisationssignal SYNC2 der zweiten Gruppe UND-Gatter 4.5 bis 4.8 zugeleitet.

Zur Erzeugung des dritten Synchronisationssignales SYNC3 wird in einem weiteren Komparator 2.5 der vierten Baugruppe 2 das sinusförmige Eingangssignal sin mit dem für alle Eingangssignale identischen Gleichanteil UM verglichen, so dass das Ausgangssignal von Komparator 2.5 wieder ein Tastverhältnis von 1:1 aufweist. Dieses Ausgangssignal wird einem Impulsbreitenwandler 2.6 zugeleitet, der das Tastverhältnis verändert und dann einen HIGH-Pegel ausgibt, wenn das cosinusförmige Eingangssignal von Multiplexer 1.1 eine maximale Amplitude aufweist. Dieses dritte Synchronisationssignal SYNC3 wird den beiden Zwischenspeichern 5.2 und 5.5 zur Synchronisation zugeleitet.

Das dritte Synchronisationssignal SYNC3, welches aus dem sinusförmigen Eingangssignal sin gewonnen wird, dient somit zur Synchronisation der Einstellung der veränderbaren Widerstände 6.1 und 6.2 bzw. Stellglieder, über die die Signale sin, -sin des inkrementalen Positionsmesssystems geleitet werden. Dadurch erfolgt die Veränderung der Widerstände 6.1 und 6.2 jeweils zu Zeitpunkten, in denen die Veränderung der Widerstandswerte nicht zu einem Sprung im weitergeleiteten Signal sin, -sin des inkrementalen Positionsmesssystems führt.

Durch die Synchronisation der UND-Gatter 4.1 bis 4.8 mittels aus dem cosinusförmigen Eingangssignal cos ermittelten ersten und zweiten Synchronisationssignalen SYNC1 und SYNC2 wird, wie oben bereits angedeutet, sichergestellt, dass die dem Eingangssignal sin zugeordneten
Ausgangssignale der Komparatoren 3.1 - 3.4 dem Zähler 5.1 und die dem Eingangssignal -sin zugeordneten Ausgangssignale der Komparatoren 3.1 - 3.4 dem Zähler 5.4 zugeleitet werden.

Die verschiedenen Synchronisationssignale SYNC1, SYNC2, SYNC3, SYNC4, die durch die Impulsbreitenwandler 2.3, 2.4, 2.6 und 2.8 der vierten Baugruppe 2 ausgegeben werden, weisen nur die unbedingt erforderliche Zeitdauer zur Übernahme der Steuersignale in die Vorwärts-Rückwärts-Zähler 5.1 und 5.4 einen HIGH-Pegel auf. Durch diese möglichst kurze Übernahmezeit wird sichergestellt, dass Störungen auf dem Ausgangssignal des Multiplexers 1.1, die ausserhalb dieses Zeitfensters für die Übernahme auftreten, nicht zu Fehlern in der Regelung führen. Sollte das Ausgangssignal des Multiplexers 1.1 dennoch gerade in diesem Zeitfenster durch eine Störung überlagert sein, wird durch die begrenzte Schrittweite der Zähler 5.1 und 5.4 der Einfluss der Störung auf die Regelung klein gehalten.

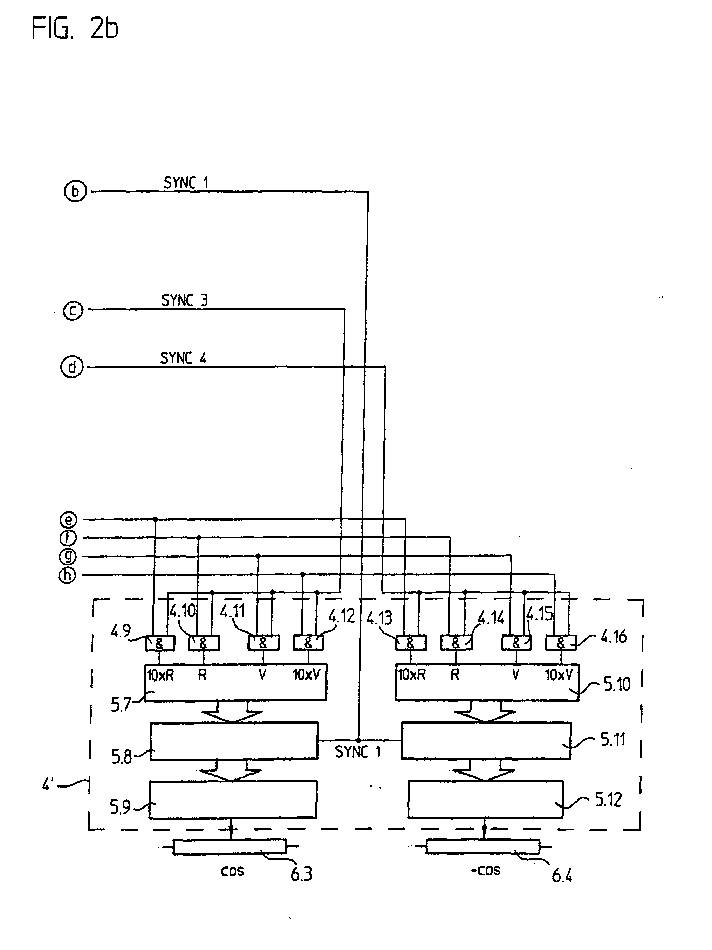

Zur Einstellung der Signal-Parameter Signal-Amplitude und Signal-Offset der cosinusförmigen Ausgangssignale cos, -cos des inkrementalen Positionsmesssystems werden zusätzlich die in Figur 2b dargestellten Baugruppen 4', 6.3, 6.4 benötigt. Gleichzeitig werden - wie dargestellt - Baugruppen aus Figur 1 a mitbenutzt, d.h. die damit erzeugten Signale auch über die entsprechenden Signalleitungen a - h der Baugruppe 4' zugeführt; bei den derart mitbenutzten Baugruppen aus Figur 2a handelt es sich insbesondere um die erste Baugruppe 1, die zweite Baugruppe 3 sowie die vierte Baugruppe 2. Die in Figur 1b dargestellte dritte Baugruppe 4', sowie die Stellglieder 6.3, 6.4 entsprechen weitgehend den in Figur 1a dargestellten Elementen, sowohl in der Verschaltung als auch in ihrer Funktion. So wird über die dritte Baugruppe 4' letztlich ebenfalls eine geeignete Stellgröße bestimmt, um die Signal-Parameter Signal-Amplitude und Signal-Offset der Signale cos, -cos des Positionsmesssystems über die Stellglieder 6.3, 6.4 auf die vorgegebenen Soll-Werte einzuregeln.

Durch die ebenfalls als veränderbare Widerstände 6.3 und 6.4 ausgebildeten Stellglieder werden wiederum Signal-Amplitude und ggf. Signal-Offset der cosinusförmigen Ausgangssignale cos, -cos des inkrementalen Positionsmesssystems verändert.

Um eine Veränderung der Widerstände 6.3 und 6.4 im Nulldurchgang der Ausgangssignale cos, -cos des Positionsmesssystems zu erreichen und damit Signalsprünge zu vermeiden, wird das Synchronisationssignal SYNC1 für die beiden Zwischenspeicher 5.8 und 5.11 der von Impulswandler 2.3 ausgegebene Synchronisationsimpuls auf der Signalleitung b benutzt.

Zur Synchronisation der Steuerung der beiden Zähler 5.7 und 5.10 werden die beiden Gruppen UND-Gatter 4.9 bis 4.12 und 4.13 bis 4.16 mit den Impulswandlern 2.6 und 2.8 bzw. mit den damit erzeugten Synchronisationssignalen SYNC3, SYNC4 auf den Signalleitungen c, d verbunden. Deren Steuerimpulse bzw. Synchronisationssignale SYNC3, SYNC4 werden aus dem sinusförmigen Ausgangssignal sin des Messsystems hergeleitet. Dadurch werden analog zu Fig. 2a die dem Eingangssignal cos zugeordneten Ausgangssignale der Komparatoren 3.1 - 3.4 dem Zähler 5.7 und die dem Eingangssignal -cos zugeordneten Ausgangssignale der Komparatoren 3.1 - 3.4 dem Zähler 5.10 zugeleitet.

Die Baugruppen 5.9 und 5.12 sind wieder als Decoder ausgebildet, um die Stellglieder bzw. Widerstände 6.3 und 6.4 proportional zum ausgegebenen Zählerwert einzustellen.

Im folgenden soll die Funktionsweise des in den Figuren 2a und 2b dargestellten, ersten Ausführungsbeispieles der erfindungsgemässen Schaltungsanordnung detailliert erläutert werden, das auch zur Durchführung des erfindungsgemäßen Verfahrens geeignet ist.
In der Regel werden durch ein inkrementales Positionsmesssystem ein periodisches, analoges Sinussignal sin und ein periodisches, analoges Cosinussignal cos ausgegeben. Aus diesen beiden Ausgangssignalen sin, cos des inkrementalen Messsystems können auf Seiten der Folgeelektronik die dazu inversen Signale -sin, -cos leicht erzeugt werden, sofern diese nicht ohnehin ebenfalls vom Positionsmesssystem ausgegeben werden, wie dies im vorliegenden Beispiel der Fall ist. Die vier Signale sin, cos, -sin, -cos werden in der ersten Baugruppe 1 dem Multiplexer 1.1 zugeleitet. Durch die Komparatoren 1.2. und 1.3 werden zwei Steuersignale für den Multiplexer 1.1 derart erzeugt, dass der Multiplexer 1.1 immer dasjenige Eingangssignal, welches gerade die maximale Amplitude aufweist, als Ausgangssignal OUT_{MUX} ausgibt. Dadurch wird über den Multiplexer 1.1 die Hüllkurve der positiven Halbwellen der vier Eingangssignale sin, cos, -sin, -cos ausgeben. Diese Hüllkurve bzw. das Ausgangssignal OUT_{MUX} des Multiplexers 1.1 ist repräsentativ für eventuelle Amplituden- und Offset-Abweichungen der Ausgangssignale des Positionsmesssystems, die in diesem Ausführungsbeispiel korrigiert werden sollen.

Mit Hilfe der ersten Baugruppe 1 wird in der erfindungsgemäßen Schaltungsanordnung somit u.a. der Ist-Wert derjenigen Signalparameter ermittelt, die letztlich auf vorgegebene Soll-Werte eingeregelt werden sollen. Im vorliegenden Beispiel handelt es sich demzufolge um die Ist-Werte der Signal-Parameter Signal-Amplitude und Signal-Offset, die auf die vorgeschlagene Art und Weise schaltungstechnisch einfach ermittelt werden können.

Die derart erzeugte Hüllkurve bzw. das Ausgangssignal OUT_{MUX} des Multiplexers 1.1 wird anschließend ersten Eingängen von vier Komparatoren 3.1 bis 3.4 zugeleitet, die einer zweiten Baugruppe 3 in der erfindungsgemäßen Schaltungsanordnung zugeordnet sind. Die zweiten Eingänge dieser vier Komparatoren 3.1 bis 3.4 sind mit Abgriffen eines Spannungsteilers 3.5 bis 3.9 verbunden. Durch den Vergleich der Amplitude der Hüllkurve mit den am Spannungsteiler 3.5 bis 3.9 abgegriffenen Spannungen wird ermittelt, ob die Maximalamplitude der Ausgangssignale sin, cos, -sin, -cos des Positionsmesssystems innerhalb eines gewünschten Bereichs oder nur geringfügig oberhalb oder unterhalb dieses Bereichs oder wesentlich oberhalb oder unterhalb dieses Bereichs liegen. Somit kann ermittelt werden, ob nur eine geringe Nachregelung, eine erhebliche Nachregelung oder ggf. gar keine Nachregelung der Signal-Amplitude bzw. des Signal-Offsets erforderlich ist. Durch die Wahl der Widerstände 3.5 bis 3.8 des Spannungsteilers können Schwellwerte SW1 bis SW4 definiert eingestellt werden und damit derjenige Bereich, in dem nur eine geringe Nachregelung erforderlich ist bzw. derjenige Bereich in dem eine erhebliche Nachregelung erforderlich ist usw..

Die zweite Baugruppe 3 der erfindungsgemäßen Schaltungsanordnung dient somit zum Vergleichen des in der ersten Baugruppe 1 ermittelten Ist-Wertes eines Signal-Parameters mit mehreren vorgegebenen Schwellwerten SW1 - SW4, Die Schwellwerte SW1 - SW4 könnnen dabei durch die geeignete Dimensionierung elektronischer Bauelemente definiert eingestellt werden, im obigen Beispiel wurde hierzu der Spannungsteiler verwendet. Über den Spannungsteiler werden die verschiedenen Schwellwerte SW1 - SW4 somit in entsprechende Vergleichsspannungen umgesetzt; in Figur 4b sind die vier gesetzten Schwellwerte in Verbindung mit der erzeugten Hüllkurve bzw. dem Ausgangssignal OUT_{MUX} des Multiplexers 1.1 dargestellt.

Um die jeweiligen relativen Maxima der Hüllkurve in Bezug auf die verschiedenen Schwellwerte SW1 - SW4 zu bewerten, ist eine Synchronisation erforderlich. Die entsprechenden Synchronisationssignale SYNC1 - SYNC4 werden wie oben erläutert von der vierten Baugruppe 2 erzeugt. Die erforderliche Synchronisation wird etwa für die Signale sin, -sin über die UND-Gatter 4.1 bis 4.4 und 4.5 bis 4.8 durchgeführt. Mittels des ersten und zweiten Synchronisationssignals SYNC1, SYNC2 werden die beiden Gruppen von UND-Gattern 4.1 bis 4.4 und 4.5 bis 4.8 jeweils dann zur Weiterleitung der Ausgangssignale der Komparatoren 3.1 bis 3.4 freigegeben, wenn die relativen Maxima der Eingangssignale sin, -sin vorliegen. Die Ausgangssignale der UND-Gatter 4.1 bis 4.8 werden als Steuersignale für die verschiedenen Zählereingänge der Zähler 5.1 und 5.4 benutzt.

Falls die Amplitude der Hüllkurve entsprechend dem Signal sin grösser ist als der maximale, mittels Spannungsteiler eingestellte Schwellwert SW3 wird vom ersten Komparator 3.1 ein Steuersignal ausgegeben, das mittels des ersten UND-Gatters 4.1 und des Synchronisationssignales SYNC1 synchronisiert und dem ersten Zählereingang 10xR des ersten Zählers 5.1 zugeleitet wird. Das Vorliegen eines Eingangssignals auf dem ersten Zählereingang 10xR des Zählers 5.1 bewirkt, dass dieser mit einer ersten Schrittweite rückwärts zählt. Dieser erste Zählereingang 10xR des Zählers 5.1 hat dabei Vorrang vor dessen zweitem Zählereingang R, dem das Ausgangssignal des zweiten Komparators 3.2 über das zweite UND-Gatter 4.2 zugeleitet wird.

Liegt die Amplitude der Hüllkurve bzw. des Ausgangssignals OUT_{MUX} des Multiplexers 1.1 etwa in einem Bereich über dem Schwellwert SW1, in dem lediglich eine geringfügige Nachregelung der Signal-Amplitude erforderlich ist, so wird durch den ersten Komparator 3.1 kein HIGH-Pegel ausgegeben; lediglich der zweite Komparator 3.2 gibt ein Steuersignal an das UND-Gatter 4.2 und damit an den zweiten Zählereingang R des ersten Zählers 5.1 aus. Daran erkennt der Zähler 5.1, dass mit einer zweiten, kleineren Schrittweite rückwärts gezählt werden soll. Die beiden Komparatoren 3.3 und 3.4 geben in den beiden geschilderten Fällen keine Ausgangssignale aus.

Liegt die Hüllkurve im Bereich zwischen den Schwellwerten SW1 und SW2, so werden von keinem der vier Komparatoren 3.1 bis 3.4 Signale ausgegeben, wodurch die Zählerstände der Zähler 5.1 und 5.4 nicht verändert werden, d.h. in diesem Fall erfolgt eine Regelung mit der Schrittweite Null. Die Signal-Parameter Signal-Amplitude und Signal-Offset liegen somit im gewünschten Sollwert-Bereich bzw. Solllwert-Intervall, so dass letztlich keine Nachregelung erforderlich ist.

Fällt die Amplitude der Hüllkurve bzw. des Ausgangssignals OUT_{MUX} des Multiplexers 1.1 in einen Bereich, der geringfügig unterhalb des Schwellwerts SW2 liegt, gibt der dritte Komparator 3.3 einen HIGH-Pegel aus. Daran erkennt der Zähler 5.1, dass mit einer zweiten Schrittweite vorwärts gezählt werden soll. Fällt die Amplitude der Hüllkurve weiter ab, gibt auch der vierte Komparator 3.4 ein Steuersignal über das vierte UND-Gatter 4.4 an den vierten Zählereingang 10xV des Zählers 5.1 aus, woran dieser erkennt, dass mit einer ersten Schrittweite vorwärts gezählt werden soll.

Aufgrund der Ausgangssignale der Komparatoren 3.1 bis 3.4 werden analog die Zählereingänge der übrigen Zähler 5.4, 5.7 und 5.10 mit den entsprechenden Signalen beaufschlagt und derart bestimmte Schrittweiten und Zählrichtungen für die verschiedenen Zähler 5.4, 5.7 und 5.10 vorgegeben.

Der Zählerstand der verschiedenen Zähler 5.1, 5.4, 5.7, 5.10 wird jeweils in einen zugeordneten bzw. nachgeordneten Zwischenspeicher 5.2, 5.5, 5.8, 5.11 übertragen. Die Zwischenspeicher 5.2, 5.5, 5.8, 5.11 geben zu synchronisierten Zeitpunkten das Zählergebnis an nachgeordnete Decoder 5.3, 5.6, 5.9. 5.12 aus, die wiederum jeweils einen zugeordneten, veränderbaren Widerstand 6.1, 6.2, 6.3, 6.4 als Stellglied in der Regelung ansteuern. Durch Veränderung dieses Widerstands entsprechend dem Zählerwert wird ein dem Zählerwert proportionaler Widerstand 6.1, 6.2, 6.3, 6.4 eingestellt, wodurch Signal-Amplitude und Signal-Offset der Signale des Positionsmesssystems beeinflusst werden, die zur Positionsbestimmung weiterverarbeitet werden.

Über die dritte Baugruppe 4 erfolgt somit die Bestimmung der jeweils erforderlichen Stellgröße, um den Signal-Parameter in Richtung des vorgegebenen Soll-Wert hin einzuregeln. Die Stellgröße wirkt hierbei über die Stellglieder 6.1 - 6.4 auf die Signale sin, cos, -sin, -cos ein. Das jeweilige Stellglied 6.1 - 6.4 ist der dritten Baugruppe 4 nachgeordnet und beaufschlagt die Signale sin, cos, -sin, -cos jeweils mit der bestimmten Stellgröße, so dass derart ein Einregeln des Signal-Parameters in Richtung des vorgegebenen Soll-Wertes erfolgt.

Die grundsätzliche Anordnung der derart betriebenen Stellglieder bzw. der veränderbaren Widerstände zur Korrektur der vom Positionsmesssystem erzeugten Signale ist in Figur 3 dargestellt, die einen Teil des Signalweges bzw. Signalkanales der vom inkrementalen Positionsmesssystem erzeugten Signale sin, -sin zeigt. Die beiden als Stellglieder genutzten, veränderbaren Widerstände 6.1 und 6.2 zur Regelung von Signal-Amplitude und ggf. Signal-Offset sind mit weiteren Widerständen 7.1 und 7.2 in Reihe geschaltet. Beide Widerstände 7.1 und 7.2 sind mit einem weiteren Widerstand 7.3 verbunden, der gegen Masse geschaltet ist. Durch die Widerstände 7.1 bis 7.3 kann sowohl der Regelbereich als auch die Empfindlichkeit der Regelung für den Signal-Offset und die Signal-Amplitude der Ausgangssignale sin, -sin des Positionsmesssystems eingestellt werden. Durch die gewählte Größe der Widerstände 7.1 und 7.2 wird hierbei der Regelbereich für die Amplitudenregelung eingestellt; über die Wahl des Widerstandes 7.3 wird die Schrittweite für die Offsetregelung beeinflusst.

In Figur 3 sind lediglich die erforderlichen Stellglieder sowie die zugeordneten Widerstände 7.1 - 7.3 für die Regelung der beiden Signale sin, -sin dargestellt; werden als Ausgangssignale eines inkrementalen Positionsmesssystems zwei periodische, um 90° zueinander versetzte Differenzsignale übertragen, d.h. ist zusätzlich die Übertragung der Signale cos, -cos vorgesehen, so sind für diesen Teil des Signalweges selbstverständlich zwei weitere Stellglieder bzw. veränderbare Widerstände 6.3, 6.4 inclusive weiterer Widerstände zur Einstellung der Regelempfindlichkeit etc. erforderlich.

Die in Figur 3 ohne Bezugszeichen dargestellten Bauelemente spielen im Zusammenhang mit der vorliegenden Erfindung keine weitere Rolle, sondern entsprechen der üblichen Ausgangsbeschaltung derartiger Positionsmesssysteme.

Aufgrund der physikalischen Gegebenheiten bei der Abtastung einer inkrementellen Messteilung ist nach dem erfindungsgemäßen Verfahren vorzugsweise eine zweistufige Regelung zur Einstellung der Signal-Amplitude und des Signal-Offsets in den Ausgangssignal des Positionsmesssystems vorzusehen. In einer ersten Stufe werden kleine Signaländerungen ausgeregelt, die durch langsames Driften im normalen Betrieb auftreten. In einer zweiten Stufe werden stärkere Amplitudenschwankungen ausgeregelt, die insbesondere bei Verschmutzung der Messteilung auftreten. Um auch hier eine schnelle Regelung für die Signal-Amplituden- und den Signal-Offset realisieren zu können ist eine betragsmäßig grössere Stellgröße im Regelkreis erforderlich, als bei der Amplituden- und Offsetregelung im störungsfreien Betrieb. Daher sind in einer vorteilhaften Ausführungsform der vorliegenden Erfindung zwei Stellgrößen vorgegeben, die sich betragsmäßig deutlich unterscheiden. Zu jeder der beiden Stellgrößen existiert ferner noch eine betragsmäßig entsprechende Stellgröße mit umgekehrtem Vorzeichen. Abhängig von den Schwankungen der Signal-Amplituden bzw. deren Relativlage zu bestimmten Schwellwerten, wird jeweils eine der vorgegebenen Stellgrößen ausgewählt und wirkt dann auf die Signale ein.

Schaltungstechnisch werden die in diesem Beispiel vorgesehenen vier verschiedenen Stellgrößen durch die unterschiedlichen Schrittweiten der verwendeten Zählern 5.1 und 5.4 und deren Zählrichtung umgesetzt.

Durch die digitale Realisierung der Ermittlung der Stellgröße des Regelkreises kann verhindert werden, dass durch Störspitzen auf dem jeweiligen Signal unerwünschte Signalbeeinflussungen durch die Regelung hervorgerufen werden.

Es hat sich als günstig erwiesen, für eine erste grössere Schrittweite den zehnfachen Wert der kleineren zweiten Schrittweite zu benutzen. Dadurch wird ein ausgewogenes Verhältnis zwischen einer möglichst genauen Regelung mit der zweiten Schrittweite und einer möglichst schnellen, überschwingungsfreien Regelung mit der ersten Schrittweite erreicht.

Eine Übernahme der jeweiligen Zählerstände der Zähler 5.1 und 5.4 in die zugeordneten Zwischenspeicher 5.2 und 5.5 erfolgt beim Nulldurchgang der jeweils zugehörigen Signale, synchronisiert durch die beiden Synchronisationssignale SYNC3, SYNC1. Dadurch wird verhindert, dass ein Zählerstand in den Zwischenspeicher übernommen wird, während der Zählerstand gerade verändert wird.

In einer alternativen Ausführungsform des ersten Ausführungsbeispieles einer erfindungsgemäßen Schaltungsanordnung kann an Stelle der vier Komparatoren 3.1 bis 3.4 und des Spannungsteilers in der zweiten Baugruppe 3 auch ein A/D-Wandler verwendet werden, der den Unterschied zwischen Soll- und Ist-Wert der Signal-Amplituden ermittelt. Dieser ermittelte Unterschied wird dann unmittelbar den Zählern 5.1, 5.4, 5.7 und 5.10 als Schrittweite zugeleitet. Dadurch können diese in einem einzigen Schritt die Abweichung zwischen Soll- und Istwert kompensieren. Eine Steuerung der Schrittweite der Zähler 5.1, 5.4, 5.7 und 5.10 über vier verschiedene Steuereingänge ist dann nicht erforderlich, da die verwendete Schrittweite unmittelbar durch den A/D-Wandler ausgegeben wird.

Weierhin ist es auch möglich, die im obigen Beispiel vorgesehenen Decoder wegzulassen, wenn etwa die verwendeten Stellglieder direkt über die Zählerstände aus den Zwischenspeichern gestellt bzw. variiert werden können.

Weiterhin kann in alternativen Varianten des erfindungsgemäßen Verfahrens bzw. der erfindungsgemäßen Schaltungsanordnung vorgesehen werden, noch mehr Schwellwerte zu setzen und derart noch mehr verschiedene Stellgrößen einzustellen usw..

In einer weiteren alternativen Ausgestaltung der beschriebenen ersten Ausführungsvariante einer erfindungsgemäßen Schaltungsanordnung können die als veränderbare Widerstände 6.1, 6.2, 6.3 und 6.4 ausgebildeten Stellglieder als Verstärker mit einstellbarem Verstärkungsfaktor realisiert werden. Der Verstärkungsfaktor wird dann proportional zu dem vom jeweiligen Zwischenspeicher 5.2, 5.5, 5.8 oder 5.11 ausgegebenen Zählerwert durch den jeweiligen Decoder 5.3, 5.6, 5.9 oder 5.12 eingestellt.

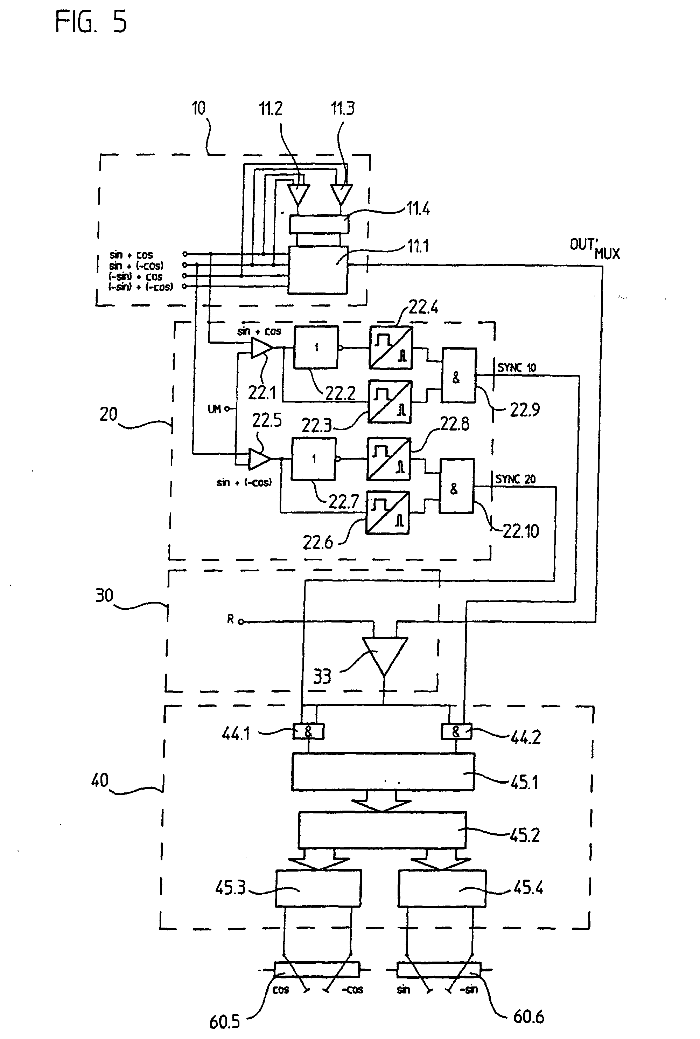

Während im ersten Ausführungsbeispiel einer erfindungsgemäßen Schaltungsanordnung eine Korrektur der Signal-Parameter Signal-Amplitude und Signal-Offset in den Ausgangssignalen eines inkrementalen Posiitonsmesssystems erfolgte, wird nunmehr ein zweites Ausführungsbeispiel einer erfindungsgemäßen Schaltungsanordnung beschrieben, über das eine Korrektur des Signal-Parameters Phasenlage möglich ist. Wie bereits oben angedeutet, kann im Meßbetrieb auch eine Ablage der idealen Phasenlage von 90° zwischen den phasenverschobenen Signalen sin, cos eines inkrementalen Positionsmesssystems auftreten. Die nachfolgend anhand der Figuren 5, 6, 7a - 7c beschriebene Schaltungsanordnung, die zur erfindungsgemäßen Korrektur des Signal-Parameters Phasenlage geeignet ist, kann etwa als Ergänzung der oben beschriebenen Schaltungsanordnung eingesetzt werden, so dass dann alle relevanten Signalparameter erfindungsgemäß korrigierbar sind. Alternativ ist aber auch denkbar, lediglich die Phasenlage über die nachfolgend beschriebene Schaltungsanordnung zu korrigieren usw..

Ferner sei darauf hingewiesen, dass im zweiten Ausführungsbeispiel einer erfindungsgemäßen Schaltungsanordnung nunmehr lediglich zwei Stellgrößen für die Einregelung der Signal-Phasenlage auf die gewünschten 90° Phasenversatz vorgegeben sind, die betragsmäßig gleich gewählt sind, aber unterschiedliche Vorzeichen aufweisen. Selbstverständlich könnte aber auch eine analoge Variante zum ersten Ausführungsbeispiel mit mehreren vorgegebenen Stellgrößen vorgesehen werden.

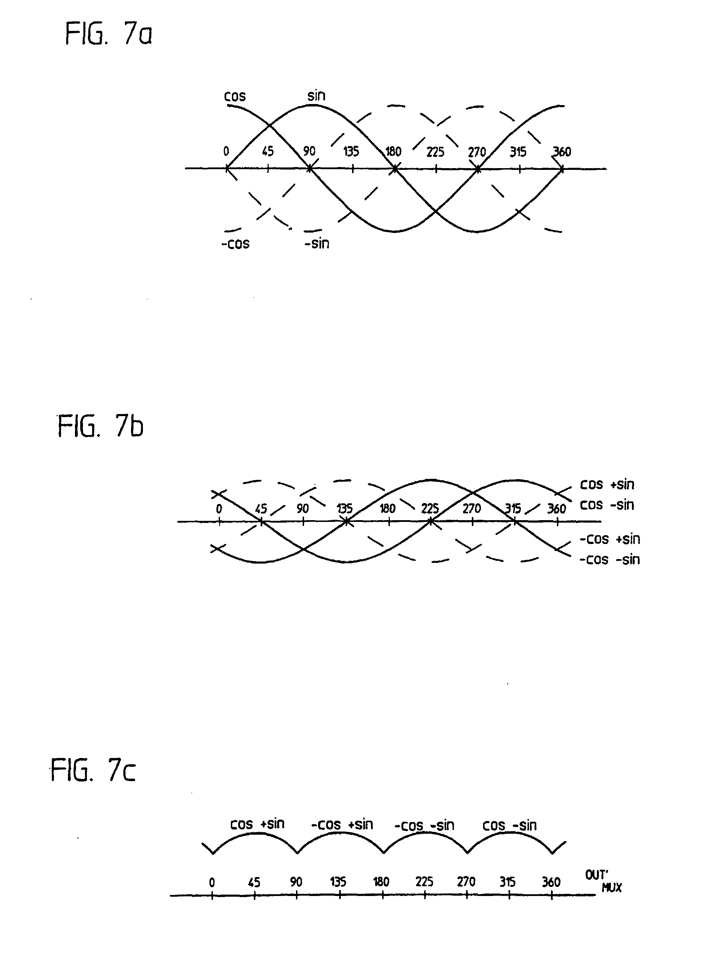

Im zweiten Ausführungsbeispiel der erfindungsgemäßen Schaltungsanordnung werden die in Figur 7a gezeigten vier Ausgangssignale sin, cos, -sin, - cos des inkrementalen Positionsmesssystems derart vorverarbeitet, dass am Eingang der ersten Baugruppe 10 im einzelnen die kombinierten Signale sin+cos, sin+(-cos), (-sin)+cos und (-sin)+(-cos) vorliegen. Der zeitliche Verlauf der einzelnen Signale ist in Figur 7b dargestellt. Grundsätzlich wie im vorigen Ausführungsbeispiel erfolgt die Verarbeitung der Eingangssignale sin+cos, sin+(-cos), (-sin)+cos und (-sin)+(-cos) in der ersten Baugruppe 10, die wiederum zwei Komparatoren 11.2, 11.3, einen Richtungsdetektor 11.4 sowie einen Multiplexer 11.1 umfasst. Am Ausgang des Multiplexers 11.1 bzw. am Ausgang der ersten Baugruppe 10 liegt somit das in Figur 7c dargestellte Signal OUT'_{MUX} vor, das die Hüllkurve der jeweiligen maximalen Signal-Halbwellen der am Eingang anliegenden Signale sin+cos, sin+(-cos), (-sin)+cos und (-sin)+(-cos) repräsentiert. Wie im ersten Ausführungsbeispeil erfolgt über die erste Baugruppe 10 somit die Selektion der jeweils maximalen Halbwellen der Eingangssignale sin+cos, sin+(-cos), (-sin)+cos und (sin)+(-cos) und die Bildung der entsprechenden Hüllkurve bzw. des Ausgangssignales OUT'_{MUX}.

Das Signal OUT'_{MUX} wird anschließend einem ersten Eingang eines Komparators 33 in einer zweiten Baugruppe 30 zugeführt. Dem zweiten Eingang des Komparators 33 wird ein Referenzsignal R zugeführt. Das Referenzsignal R entspricht hierbei dem Sollwert der maximalen Signalamplitude des Signales sin+cos.

Die in der zweiten Baugruppe 30 vom Komparator 33 gelieferten Ausgangssignale werden anschließend in einer dritten Baugruppe 40 jeweils einem ersten Eingang von zwei UND-Gattern 44.1, 44.2 zugeführt. Am jeweils anderen Eingang der UND-Gatter 44.1, 44.2 liegen Synchronisationssignale SYNC10, SYNC20 an, die in einer vierten Baugruppe 20 erzeugt werden. Über die Synchronisationssignale SYNC10, SYNC20 erfolgt wie im obigen Beispiel eine Freischaltung der UND-Gatter 44.1, 44.2 zu definierten Zeitpunkten.

Im freigeschalteten Zustand wird derart das vom Komparator 33 gelieferte Ausgangssignal einem der beiden Eingänge V, R eines Zählers 45.1 zugeleitet. Der Zähler 45.1 ist wiederum als üblicher Vorwärts-Rückwärts-Zähler ausgebildet; je nachdem, welcher der beiden Eingänge V, R vom Eingangssignal beaufschlagt wird, erfolgt ein Zählen mit einer bestimmten Schrittweite in Vorwärts- oder Rückwärts-Richtung.

Der jeweilige Zählerstand bzw. das jeweilige Zählergebnis des Zählers 45.1 wird anschließend einem Zwischenspeicher 45.2 zugeleitet und anschließend zwei Decodern 45.3, 45.4 zugeführt. Jeder der beiden Decoder 45.3, 45.4 ist hierbei wie gezeigt einem Paar von Signalen sin, -sin bzw. cos, -cos zugeordnet. Über die Decoder 45.3, 45.4 wird dann wiederum jeweils ein Stellglied 60.5, 60.6 definiert verstellt, über das die Beeinflussung der Phasenlagen der Signale sin, -sin bzw. cos, -cos möglich ist. Hierzu ist vorgesehen, die Stellglieder 60.5, 60.6 wiederum als veränderbare Widerstände auszubilden. Die Widerstände 60.5, 60.6 weisen hierbei je ein Einstellelement für jedes der Signale sin, -sin bzw. cos, -cos auf. An das Stellglied 60.5 wird wie gezeigt an je ein Ende ferner das Signal cos bzw. das Signbal -cos geschaltet; an Stellglied 60.6 wird an je ein Ende das Signal sin bzw. das Signal -sin geschaltet. Auf diese Art und Weise kann das Signal sin bzw. - sin gegenüber dem Signal cos hinsichtlich der Phasenlage sowohl in positiver als auch in negativer Richtung verschoben werden; analoges gilt für die Signale cos, -cos in Bezug auf das Signal sin.

Das gleichzeitige Stellen bzw. Regeln der Phasen in den Verarbeitungskanälen für die sinus- und cosinusförmigen Signale hat hierbei den Vorteil, dass keine Wegverschiebung bei der Signalbeeinflussung durch die Phasenregelung registriert wird. Ferner kann derart der gleiche Zählerstand aus dem Zwischenspeicher 45.2 zur Beeinflussung der Phasenlage im Verarbeitungskanal für die cosinusförmigen Signale verwendet werden, der hierzu auf den zweiten Decoder 45.5 geschaltet wird und damit das zweite Stellglied 60.6 mit den beiden Einstellelementen für die Signale cos, -cos beeinflusst.

Die Erzeugung der beiden Synchronisationssignale SYNC10, SYNC20 erfolgt in einer vierten Baugruppe 20. Zur Erzeugung des Synchronisationssignales SYNC 10 wird das Signal sin+cos einem ersten Eingang eines Komparators 22.1 zugeführt; am zweiten Eingang dieses Komparators 22.1 liegt das Gleichspannungs-Referenzsignal UM. Das Ausgangssignal des ersten Komparators 22.1 wird in einem ersten Signalpfad über einen Impulsbreitenwandler 22.3 einem ersten OR-Gatter 22.9 zugeführt. In einem zweiten Signalpfad wird das Ausgangssignal des Komparators 22.1 dem OR-Gatter 22.9 über einen Inverter 22.2 und einen Impulsbreitenwandler 22.4 zugeführt. Am Ausgang des ersten OR-Gatters resultiert schließlich das Synchronisationssignal SYNC10, das wie oben beschrieben zum selektiven Freischalten des Zählereinganges R im Zähler 45.1 zu bestimmten Zeitpunkten genutzt wird.

Analog hierzu erfolgt die Erzeugung des zweiten Synchronisationssignales SYNC20 aus dem Signal sin+(-cos) über den Komparator 22.5, den Impulsbreitenwandler 22.6, den Inverter 22.2, den Impulsbreitenwandler 22.8 und das zweite OR-Gatter 22.10. Das zweite Synchronisationssignal wird zum Freischalten des Zählereinganges V im Zähler 45.1 verwendet.

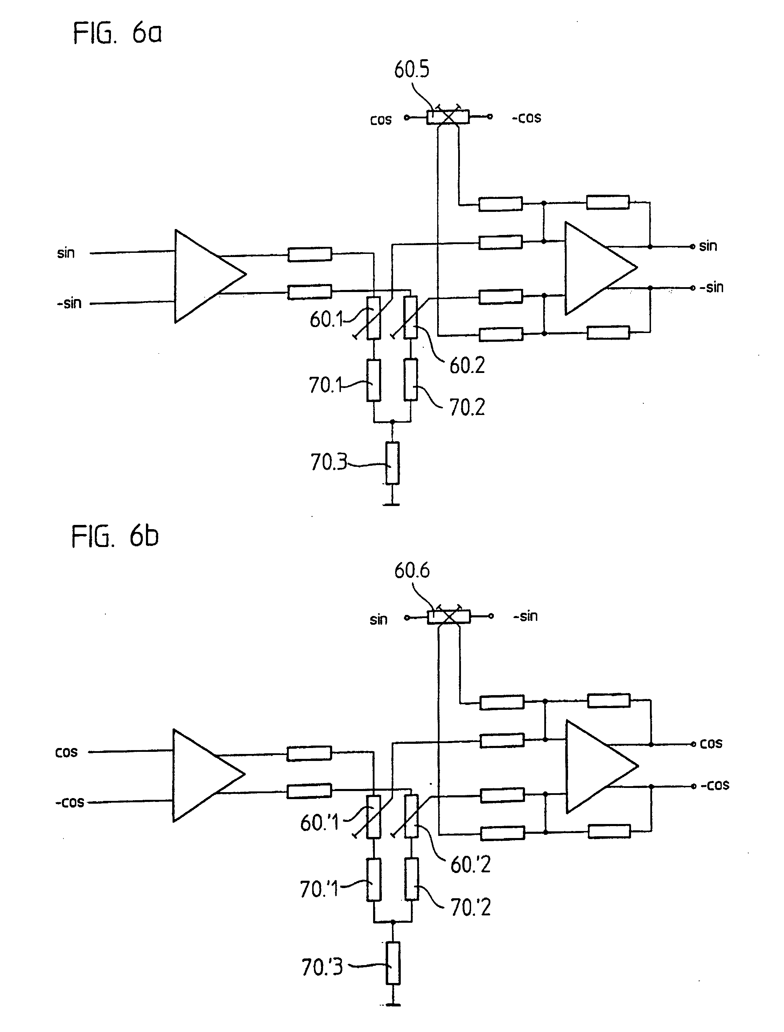

In Figur 6a und 6b sind schließlich die Anordnungen der Stellglieder 60.5, 60.6 in den Signalkanälen eines inkrementalen Positionsmesssystems dargestellt, die in der beschriebenen Art und Weise zur Korrektur des Signal-Parameters Signal-Phasenlage bei den Signalen sin, -sin bzw. cos, -cos eingesetzt werden. Desweiteren sind in den Figuren 6a und 6b die verschiedenen Stellglieder 60.1, 60.2, 60.1', 60.2' zur Korrektur bzw. Regelung der Signal-Parameter Signal-Amplitude und Signal-Offset dargestellt, die gemäß dem oben beschriebenen Ausführungsbeispiel arbeiten. Über das Beispiel in den Figuren 6a, 6b ist somit die Korrektur aller relevanten Signal-Parameter eines inkrementalen Positionsmesssystems möglich. Die weiteren Elemente in den Figuren 6a, 6b entsprechen wiederum denjenigen aus dem Ausführungsbeispiel in Figur 3.

Im Rahmen der vorliegenden Erfindung existieren somit eine Reihe von Ausführungsmöglichkeiten bezüglich der Korrektur der Signale eines inkrementalen Positionsmesssystems. Je nach erforderlicher Signalqualität lassen sich erfindungsgemäß die verschiedenen Signal-Parameter korrigieren.

## Patentansprüche

1. Verfahren zur Korrektur von periodischen Signalen (sin, cos, -sin, -cos) eines inkrementalen Positionsmesssystems, wobei zur Korrektur ein oder mehrere Signalparameter über mindestens ein Stellglied (6.1, 6.2, 6.3, 6.4; 60.5; 60.6) auf vorgegebene Soll-Werte eingeregelt werden und das Korrekturverfahren folgende Schritte aufweist:
a) Ermittlung des Ist-Wertes eines Signal-Parameters des periodischen Signales (sin, cos, -sin, -cos);
b) Vergleich des ermittelten Ist-Wertes des Signal-Parameters mit einem oder mehreren vorgegebenen Schwell- oder Referenzwerten (SW1, SW2, SW3, SW4; R);
c) Bestimmung einer Stellgröße (S) zur Regelung des Signal-Parameters in Richtung auf den vorgegebenen Soll-Wert, wobei die Stellgröße (S) in Abhängigkeit von der Relativlage des Ist-Wertes des Signal-Parameters zu den Schwell- oder Referenzwerten (SW1, SW2, SW3, SW4; R) aus mindestens zwei vorgegebenen, verschiedenen Stellgrößen (S) ausgewählt wird und wobei sich die verschiedenen Stellgrößen betragsmäßig unterscheiden;
d) Einwirken der Stellgröße (S) auf den Signal-Parameter über ein Stellglied (6.1, 6.2, 6.3, 6.4; 60.5; 60.6), um den Signal-Parameter in Richtung des vorgegebenen Soll-Wertes einzuregeln.

2. Verfahren nach Anspruch 1, wobei als Signal-Parameter die Signal-Amplitude und/oder der Signal-Offset auf vorgegebene Soll-Werte eingeregelt wird bzw. werden.

3. Verfahren nach Anspruch 1, wobei mindestens vier vorgegebene Stellgrößen (S) zur Verfügung stehen, die sich betrags- und vorzeichenmäßig voneinander unterscheiden.

4. Verfahren nach Anspruch 1, wobei eine Änderung des Stellgröße (S) lediglich zu Zeitpunkten erfolgt, in denen die Amplitude des periodischen Signals (sin, cos, -sin, -cos) Null ist.

5. Verfahren nach Anspruch 1, wobei die Stellgröße (S) zur Regelung des Signalparameters lediglich eine Signalperiode lang auf die Signale (sin, cos, -sin, -cos) einwirkt.

6. Verfahren nach Anspruch 2, wobei zur Ermittlung der Ist-Werte der Signalparameter Signal-Amplitude und Signal-Offset eine Hüllkurve aus jemem positiven Halbwellen der periodischen Signale (sin, cos, -sin, -cos) des Positionsmesssystems gebildet wird, die maximale Signalamplituden aufweisen und nachfolgend die Amplitude der Hüllkurve mit den vorgegebenen Schwellwerten (SW1, SW2, SW3, SW4) verglichen wird.

7. Verfahren nach Anspruch 6, wobei zur Bildung der Hüllkurve die periodischen Signale (sin, cos, -sin, -cos) einem Multiplexer (1.1) zugeführt werden.

8. Verfahren nach Anspruch 1, wobei die Einstellung der Stellgröße (S) durch die Selektion eines Zählereinganges (R, V, 10xR, 10xV) mindestens eines Zählers (5.1, 5.4, 5.7, 5.10) erfolgt und durch den gewählten Zählereingang (R, V, 10xR, 10xV) sowohl die Zählrichtung als auch die Zählerschrittweite bestimmt ist.

9. Verfahren nach Anspruch 8, wobei die verschiedenen Zählereingänge (R, V, 10xR, 10xV) in Abhängigkeit von der Relativlage des Ist-Wertes des Signal-Parameters zu den vorgegebenen Schwell- oder Referenzwerten (SW1, SW2, SW3, SW4; R) beaufschlagt werden.

10. Verfahren nach Anspruch 8, wobei in Abhängigkeit vom aktuellen Zählerstand ein einstellbarer Widerstand (6.1, 6.2, 6.3, 6.4) zur Einwirkung auf die Signale (sin, cos, -sin, -cos) eingestellt wird.

11. Verfahren nach Anspruch 8, wobei dem Zähler (5.1, 5.4, 5.7, 5.10) zwei Zählereingänge (V, R; 10V, 10R) mit unterschiedlichen Zählrichtungen zugeordnet sind.

12. Verfahren nach Anspruch 8, wobei dem Zähler (5.1, 5.4, 5.7, 5.10) zwei Zählereingänge (V, 10V; R, 10R) mit Zählerschrittweiten zugeordnet sind, die sich deutlich voneinander unterscheiden.

13. Verfahren nach Anspruch 1, wobei die Bestimmung des jeweiligen Ist-Wertes des Signalparameters innerhalb einer Signalperiode erfolgt

14. Verfahren nach Anspruch 1, wobei das Verfahren solange durchgeführt wird, bis der Signal-Parameter im Bereich des vorgegebenen Soll-Wertes liegt.

15. Schaltungsanordnung zur Korrektur von periodischen Signalen eines inkrementalen Positionsmesssystems, wobei zur Korrektur der Ist-Werte eines Signalparameters dieser auf einen vorgegebenen Soll-Wert einregelbar ist und die Schaltungsanordnung
a) eine erste Baugruppe (1) mit einem Multiplexer (1.1) aufweist, an dessen Eingängen die periodischen Signale (sin, cos, -sin, -cos) anliegen und ferner
b) weitere Baugruppen (3, 4) aufweist, in denen ein Vergleich des Ausgangssignales (OUT_{MUX}) des Multiplexers (1.1) mit ein oder mehreren, vorgegebenen Schwell- oder Referenzwerten (SW1, SW2, SW3, SW4) erfolgt und in Abhängigkeit der Relativlage des Ist-Wertes des Signal-Parameters zu den vorgegebenen Schwell- oder Referenzwerten (SW1, SW2, SW3, SW4) eine Auswahl einer Stellgröße (S) aus mindestens zwei vorgegebenen, verschiedenen Stellgrößen (S) erfolgt, über die eine Einwirkung auf den Signal-Parameter über ein Stellglied (6.1, 6.2, 6.3, 6.4) erfolgt, um den Signal-Parameter in Richtung des vorgegebenen Soll-Wertes einzuregeln und und wobei sich die verschiedenen Stellgrößen betragsmäßig unterscheiden.

16. Schaltungsanordnung nach Anspruch 15, wobei der Multiplexer (1.1) in der ersten Baugruppe (1) Steuerungseingänge aufweist, die mit Ausgängen von Komparatoren (1.2, 1.3) verbunden sind, denen eingangsseitig selektiv periodische Signale Signale (sin, cos, -sin, -cos) zugeführt werden, so dass das Ausgangssignal (OUT_{MUX}) des Multiplexers (1.1) eine Küllkurve aus den positiven Halbwellen der am Eingang anliegenden Signale (sin, cos, -sin, -cos) mit jeweils maximaler Amplitude darstellt.

17. Schaltungsanordnung nach Anspruch 15, wobei die Schaltungsanordnung eine zweite Baugruppe (3) umfasst, die mindestens einen Komparator (3.1, 3.2, 3.3, 3.4) aufweist, an dessen erstem Eingang das Ausgangssignal (OUT_{MUX}) des Multiplexers (1.1) anliegt und an dessen zweitem Eingang der vorgegebene Schwell- oder Referenzwert (SW1, SW2, SW3, SW4) anliegt.

18. Schaltungsanordnung nach Anspruch 17, wobei die zweite Baugruppe (3) mehrere Komparatoren (3.1 - 3.4) umfasst, deren jeweils zweite Eingänge mit Abgriffen eines Spannungsteilers verbunden sind, wodurch ein Vergleich des Ausgangssignales (OUT_{MUX}) des Multiplexers (1.1) mit am Spannungsteiler einstellbaren Schwellwerten (SW1 - SW4) erfolgt.

19. Schaltungsanordnung nach Anspruch 17, wobei die Schaltungsanordnung eine dritte Baugruppe (4) umfasst, die mindestens einen Zähler (5.1, 5.4, 5.7, 5.10) aufweist, der mindestens zwei verschiedene Zählereingänge (V, R, 10xV, 10xR) besitzt, denen selektiv die Ausgangssignale aus der zweiten Baugruppe (3) zugeführt werden und wobei durch die mindestens zwei Zählereingänge (V, R, 10xV, 10xR) unterschiedliche Zählrichtungen vorgegeben sind.

20. Schaltungsanordnung nach Anspruch 19, wobei der Zähler (5.1, 5.4, 5.7, 5.10) weitere Zählereingänge (10xR, 10xV) aufweist, durch die neben der Zählrichtung auch unterschiedliche Zählerschrittweiten vorgegeben sind.

21. Schaltungsanordnung nach Anspruch 19, wobei die dritte Baugrupe (4) zur selektiven Zuführung der Ausgangssignale der zweiten Baugruppe (3) auf bestimmte Zählereingänge (V, R, 10xV, 10xR) mehrere UND-Gatter (4.1 - 4.16) umfasst, die vor den Zählereingängen (V, R, 10xV, 10xR) angeordnet sind und an ersten Eingängen der UND-Gatter (4.1 - 4.16) die Ausgangssignale der zweiten Baugruppe (3) anliegen.

22. Schaltungsanordnung nach Anspruch 19, wobei die dritte Baugruppe (4) ferner mindestens einen Zwischenspeicher (5.2, 5.5, 5.8, 5.11) umfasst, der dem Zähler (5.1, 5.4, 5.7, 5.10) nachgeordnet ist und an den der jeweils aktuelle Zählerstand ausgegeben wird und die dritte Baugruppe (4; 4') femer mindestens einen Decoder (5.3, 5.6, 5.9, 5.12) umfasst, der dem Zwischenspeicher (5.2, 5.5, 5.8, 5.11) nachgeordnet ist und an den die Zwischenspeicher-Werte ausgegeben werden.

23. Schaltungsanordnung nach Anspruch 21, wobei die Schaltungsanordnung ferner eine vierte Baugruppe (2) umfasst, über die verschiedene Synchronisationssignale (SYNC2, SYNC4) erzeugbar sind, die das selektive Zuführen von Signalen auf die mindestens zwei Zählereingänge (V, R, 10xV, 10xR) synchronisieren, wozu diese Synchronisationssignale (SYNC2, SYNC4) mit zweiten Eingängen der UND-Gatter (4.1 - 4.16) verbunden sind.

24. Schaltungsanordnung nach Anspruch 21 und 22, wobei über die vierte Baugruppe (2) weitere Synchronisationssignale (SYNC1, SYNC3) erzeugbar sind, die jeweils unterschiedlichen Zwischenspeichern (5.2, 5.5, 5.8, 5.11) zugeführt werden .

25. Schaltungsanordnung nach Anspruch 22, wobei dem Decoder (5.3, 5.6, 5.9, 5.12) ein Stellglied (6.1, 6.2, 6.3, 6.4) nachgeordnet ist, das proportional zum jeweiligen Zählerstand verstellbar ist und welches derart im Signalweg des Positionsmesssystems angeordnet ist, dass damit der jeweilige Signal-Parameter auf den vorgegebenen Soll-Wert einregelbar ist.

26. Schaltungsanordnung nach Anspruch 25, wobei das Stellglied (6.1, 6.2, 6.3, 6.4) jeweils als veränderbarer Widerstand ausgebildet ist.

## Claims

1. Method for the correction of periodic signals (sin, cos, -sin, -cos) from an incremental position measuring system, wherein for the correction, one or more signal parameters are adjusted to preset desired values by means of at least one actuating member (6.1,6.2,6.3,6.4; 60.5; 60.6), and the correcting method has the following steps:
a) determination of the actual value of a signal parameter of the periodic signal (sin, cos, -sin, -cos),
b) comparison of the detected actual value of the signal parameter with one or more preset threshold or reference values (SW1,SW2,SW3,SW4; R);
c) determination of a control variable (S) for controlling the signal parameter in the direction toward the predetermined desired value, the control variable (S) being selected as a function of the relative position of the actual value of the signal parameter with respect to the threshold or reference values (SW1,SW2,SW3,SW4; R) from at least two preset, different control variables (S),
d) action by the control variable (S) on the signal parameter via an actuating member (6.1, 6.2,6.3,6.4; 60.5; 60.6) for adjusting the signal parameter in the direction of the preset desired value.

2. Method according to claim 1, wherein the signal amplitude and/or the signal offset as the signal parameters are adjusted to preset desired values.

3. Method according to claim 1, wherein at least four preset control variables (S) are available, which differ from each other in respect of their amounts and signs.

4. Method according to claim 1, wherein a change of the control variable (S) takes places only at the times at which the amplitude of the periodic signal (sin, cos, -sin, -cos) is zero.

5. Method according to claim 1, wherein the control variable (S) for controlling the signal parameter acts only for the length of one signal period on the signals (sin, cos, -sin, -cos).

6. Method according to claim 2, wherein, for determining the actual values of the signal parameters signal amplitude and signal offset, an envelope curve is formed from those positive half-waves of the periodic signals (sin,cos, - sin,-cos) from the position measuring system which have maximum signal amplitudes, and the amplitude of the envelope curve is subsequently compared with the preset threshold values (SW1,SW2,SW3,SW4).

7. Method according to claim 6, wherein the periodic signals (sin, cos, -sin, - cos) are supplied to a multiplexer (1.1) for forming the envelope curve.

8. Method according to claim 1, wherein the setting of the control variable (S) takes place by means of selecting a counter input (R, V, 10xR, 10xV) of at least one counter (5.1,5.4,5.7,5.10), and both the counting direction and the step increment of the counter are determined by the selected counter input (R,V, 10xR, 10xV).

9. Method according to claim 8, wherein the various counter inputs (R,V, 10xR, 10xV) are acted upon as a function of the relative position of the actual value of the signal parameter in relation to the preset threshold or reference values (SW1,SW2, SW3,SW4; R).

10. Method according to claim 8, wherein an adjustable resistor (6.1,6.2,6.3,6.4) for acting on the signals (sin, cos, -sin, -cos) is set as a function of the actual count.

11. Method according to claim 8, wherein two counter inputs (V,R; 10V, 10R) with different counting directions are assigned to the counter (5.1,5.4,5.7,5.10).

12. Method according to claim 8, wherein two counter inputs (V, 10V; R, 10R) with counter step increments which clearly differ from each other, are assigned to the counter (5.1,5.4,5.7,5.10).

13. Method according to claim 1, wherein the determination of the respective actual value of the signal parameter takes place within one signal period.

14. Method according to claim 1, wherein the method is executed until the signal parameter lies within the range of the preset desired value.

15. Circuit arrangement for the correction of periodic signals from an incremental position measuring system, wherein, for correcting the actual values of a signal parameter, the latter can be adjusted to a preset desired value, and the circuit arrangement
a) has a first assembly (1) with a multiplexer (1.1), to the inputs of which the periodic signals (sin, cos, -sin, -cos) are applied, and furthermore
b) has further assemblies (3, 4) in which a comparison of the output signal (OUT_{MUX})from the multiplexer (1.1) with one or more preset threshold or reference values (SW1,SW2,SW3,SW4) takes place and, as a function of the relative position of the actual value of the signal parameter in relation to the preset threshold or reference values (SW1,SW2,SW3,SW4), a selection of a control variable (S) from at least two preset, different control variables (S) is performed, through which an action on the signal parameter is taken by means of an actuating member (6.1,6.2,6.3,6.4) in order to adjust the signal parameter in the direction of the preset desired value, and wherein the various control variables differ in respect of their amounts.

16. Circuit arrangement according to claim 15, wherein the multiplexer (1.1) in the first assembly (1) has control inputs which are connected with outputs of comparators (1.2,1.3), to the inputs of which selectively periodic signals (sin,cos, -sin, -cos) are supplied, so that the output signal (OUT_{MUX}) from the multiplexer (1.1) represents an envelope curve of the positive half-waves of the signals (sin, cos, -sin, -cos) applied at the input, with the respective maximum amplitude.

17. Circuit arrangement according to claim 15, wherein the circuit arrangement comprises a second assembly (3), which has at least one comparator (3.1,3.2,3.3,3.4), to the first input of which the output signal (OUT_{MUX}) from the multiplexer (1.1) is applied, and to the second input of which the preset threshold or reference value (SW1,SW2,SW3, SW4) is applied.

18. Circuit arrangement according to claim 17, wherein the second assembly (3) comprises a plurality comparators (3.1 to 3.4), the respective second inputs of which are connected with pickups of a voltage divider, because of which a comparison of the output signal (OUT_{MUX}) from the multiplexer (1.1) with threshold values (SW1 to SW4), which can be set at the voltage divider, takes place.

19. Circuit arrangement according to claim 17, wherein the circuit arrangement comprises a third assembly (4) which has at least one counter (5.1,5.4,5.7,5.10) having at least two different counter inputs (V, R, 10xV, 10xR) to which the output signals from the second assembly (3) are selectively supplied, and wherein different counting directions are preset by the at least two counter inputs (V, R, 10xV, 10xR).

20. Circuit arrangement according to claim 19, wherein the counter (5.1,5.4,5.7,5.10) has further counter inputs (10xR, 10xV), by means of which different counter step increments are also preset, besides the counting direction.

21. Circuit arrangement according to claim 19, wherein for the selective provision of the output signals of the second assembly (3) to defined counter inputs (V, R, 10xV, 10xR), the third assembly (4) comprises a plurality of AND gates (4.1 to 4.16) which are arranged upstream of the counter inputs (V,R, 10xV, 10xR), and the output signals of the second assembly (3) are applied to first inputs of the AND gates (4.1 to 4.16).

22. Circuit arrangement according to claim 19, wherein the third assembly (4) furthermore has at least one interim storage device (5.2,5.5,5.8,5.11) which is arranged downstream of the counter (5.1,5.4,5.7,5.10) and to which the respective actual count is issued, and the third assembly (4,4') moreover comprises at least one decoder (5.3,5.6,5.9,5.12) which is arranged downstream of the interim storage device (5.2,5.5,5.8.5.11) and to which the interim storage device values are issued.

23. Circuit arrangement according to claim 21, wherein the circuit arrangement furthermore comprises a fourth assembly (2) by means of which different synchronisation signals (SYNC2, SYNC4) can be generated which synchronise the selective provision of signals to the at least two counter inputs (V,R, 10xV, 10xR), to which end these synchronisation signals (SYNC2, SYNC4) are connected with the second inputs of the AND gates (4.1 to 4.16).

24. Circuit arrangement according to claim 21 and 22, wherein further synchronisation signals (SYNC1, SYNC3) can be generated by means of the fourth assembly (2), each of which is supplied to different interim storage devices (5.2,5.5,5.8, 5.11).

25. Circuit arrangement according to claim 22, wherein an actuating member (6.1,6.2,6.3,6.4) is arranged downstream of the decoder (5.3,5.6,5.9,5.12) which can be adjusted proportionally with the respective count and which is arranged in the signal path of the position measuring system in such a way that by means of this the respective signal parameter can be adjusted to the preset desired value.

26. Circuit arrangement according to claim 25, wherein the actuating member (6.1,6.2,6.3,6.4) is in each case embodied as an adjustable resistor.

## Revendications

1. Procédé pour la correction de signaux périodiques (sin, cos, -sin, -cos) d'un système de mesure de position incrémental, dans lequel, pour la correction, un ou plusieurs paramètres de signal sont régulés à des valeurs de consigne prédéfinies à l'aide d'au moins un organe de réglage (6.1, 6.2, 6.3, 6.4; 60.5; 60.6), ledit procédé de correction comprenant les étapes suivantes :
a) détermination de la valeur effective d'un paramètre de signal du signal périodique (sin, cos, -sin, -cos);
b) comparaison de la valeur effective déterminée du paramètre de signal à une ou plusieurs valeurs seuils ou de référence (SW1, SW2, SW3, SW4; R) prédéterminées;
c) détermination d'une variable réglante (S) pour réguler le paramètre se signal en direction de la valeur de consigne prédéfinie, la variable réglante (S) étant sélectionnée parmi aux moins deux variables réglantes (S) différentes prédéterminées, en fonction de la position relative de la valeur effective du paramètre de signal par rapport aux valeurs seuils ou de référence (SW1, SW2, SW3, SW4; R), et les différentes variables réglantes étant différentes en valeur;
d) action de la variable réglante (S) sur le paramètre de signal par l'intermédiaire d'un organe de réglage (6.1, 6.2, 6.3, 6.4; 60.5; 60.6) aux fins de réguler le paramètre de signal en direction de la valeur de consigne prédéfinie.

2. Procédé selon la revendication 1, dans lequel comme paramètre de signal, l'amplitude de signal et/ou le déphasage de signal est ou sont régulé(s) à la valeur de consigne.

3. Procédé selon la revendication 1, dans lequel d'au moins quatre variables réglantes (S) prédéterminées, différentes en valeur et en signe, sont disponibles.

4. Procédé selon la revendication 1, dans lequel un changement de variable réglante (S) a lieu seulement aux instants pour lesquels l'amplitude du signal périodique (sin, cos, -sin, -cos) est nulle.

5. Procédé selon la revendication 1, dans lequel la variable réglante (S) pour la régulation du paramètre de signal agit seulement pendant une période de signal sur les signaux (sin, cos, -sin, -cos).

6. Procédé selon la revendication 2, dans lequel, pour déterminer les valeurs effectives des paramètres de signal amplitude de signal et déphasage de signal, une courbe enveloppe est formée à partir des demi-ondes positives des signaux périodiques (sin, cos,-sin, -cos) du système de mesure de position, qui présentent l'amplitude de signal maximale, à la suite de quoi l'amplitude de la courbe enveloppe est comparée aux valeurs seuils (SW1, SW2,SW3,SW4) prédéterminées.

7. Procédé selon la revendication 6, dans lequel, pour former la courbe enveloppe, les signaux périodiques (sin, cos,-sin, -cos) sont introduits dans un multiplexeur (1.1).

8. Procédé selon la revendication 1, dans lequel, la détermination de la variable réglante (S) a lieu par la sélection d'une entrée de compteur (R, V, 10xR, 10xV) d'au moins un compteur (5.1, 5.4, 5.7, 5.10) et dans lequel la direction de comptage ainsi que la longueur du pas de comptage sont déterminées par l'entrée de compteur (R, V, 10xR, 10xV) sélectionnée.

9. Procédé selon la revendication 8, dans lequel les différentes entrées de compteur (R, V, 10xR, 10xV) sont sollicitées en fonction de la position relative de la valeur effective du paramètre de signal par rapport aux valeurs seuils et de référence (SW1, SW2, SW3, SW4; R) prédéterminées.

10. Procédé selon la revendication 8, dans lequel une résistance ajustable (6.1, 6.2, 6.3, 6.4) est réglée en fonction de la position actuelle du compteur, aux fins d'agir sur les signaux (sin, cos, -sin, -cos).

11. Procédé selon la revendication 8, dans lequel deux entrées de compteur (V, R, 10V, 10R) avec des directions de comptage différentes sont associées au compteur (5.1, 5.4, 5.7, 5.10).

12. Procédé selon la revendication 8, dans lequel deux entrées de compteur (V, 10V; R, 10R),, avec des longueurs de pas de comptage clairement différenciées, sont associées au compteur (5.1, 5.4, 5.7, 5.10).

13. Procédé selon la revendication 1, dans lequel la détermination de la valeur effective du signal de paramètre concerné a lieu à l'intérieur d'une période de signal.

14. Procédé selon la revendication 1, dans lequel le procédé est appliqué jusqu'à ce que le paramètre de signal soit situé dans le voisinage de la valeur de consigne prédéfinie.

15. Circuit pour la correction des signaux périodiques d'un système de mesure de position incrémental, dans lequel, pour la correction des valeurs effectives d'un paramètre de signal, ledit paramètre de signal est réglé à une valeur de consigne prédéfinie, et ledit circuit
a) comprend un premier module (1) avec un multiplexeur (1.1), aux entrées duquel sont appliqués les signaux périodiques (sin ,cos, -sin, -cos) et
b) comprend des modules (3, 4) supplémentaires, dans lesquels une comparaison du signal de sortie (OUT_{MUX}) du multiplexeur (1.1) avec une ou plusieurs valeurs seuils ou de référence (SW1, SW2, SWW, SW4) a lieu et, en fonction de la position relative de la valeur effective du paramètre de signal par rapport aux valeurs seuils ou de référence (SW1, SW2, SWW, SW4), une variable réglante (S), par l'intermédiaire de laquelle le paramètre de signal par le biais est modifié à l'aide d'un organe de réglage (6.1, 6.2, 6.3, 6.4) aux fins de réguler ledit paramètre de signal en direction de la valeur de consigne prédéfinie, est sélectionnée parmi au moins deux variables réglantes (S) différentes prédéterminées, les variables réglantes (S) différentes ayant des valeurs différentes.

16. Circuit selon la revendication 15, dans lequel le multiplexeur (1.1), dans le premier module (1), comporte deux entrées de commande qui sont reliées aux sorties de comparateurs (1.2, 1.3) aux entrées desquels sont appliqués, de manière sélective, des signaux périodiques (sin , cos, -sin, -cos), de telle sorte que le signal de sortie (OUT_{MUX}) du multiplexeur (1.1) représente une courbe enveloppe des demi-ondes positives des signaux (sin , cos, -sin, -cos) d'amplitude maximale appliqués à l'entrée.

17. Circuit selon la revendication 15, dans lequel le circuit comprend un deuxième module (3) qui comporte au moins un comparateur (3.1, 3.2, 3.3, 3.4), à la première entrée duquel est appliqué le signal de sortie (OUT_{MUX}) du multiplexeur (1.1) et à la deuxième entrée duquel est appliquée la valeur seuil ou de référence (SW1, SW2, SW3, SW4) prédéterminée.

18. Circuit selon la revendication 17, dans lequel le deuxième module (3) comporte plusieurs comparateurs (3.1-3.4), dont la deuxième entrée est reliée chaque fois à un point d'un diviseur de tension, une comparaison du signal de sortie (OUT_{MUX}) du multiplexeur (1.1) avec des valeurs seuils ou de référence (SW1-SW4) réglées au niveau du diviseur de tension étant ainsi réalisée.

19. Circuit selon la revendication 17, dans lequel le circuit comprend un troisième module (4), qui comporte au moins un compteur (5.1, 5.4, 5.7, 5.10) avec au moins deux entrées de compteur (V, R, 10xV, 10xR) différentes, auxquelles sont appliqués de manière sélective les signaux de sortie provenant du deuxième module (3), des directions de comptage différentes étant prédéterminées par les entrées de compteur (V, R, 10xV, 10xR), au nombre d'au moins deux.

20. Circuit selon la revendication 19, dans lequel le compteur (5.1, 5.4, 5.7, 5.10) présente des entrées de compteur (10xV, 10xR) supplémentaires, à l'aide desquelles différentes longueurs de pas de comptage sont prédéterminées en plus de la direction de comptage.

21. Circuit selon la revendication 19, dans lequel le troisième module (4), pour l'application sélective du signal de sortie du deuxième module (3) à certaines entrées de compteur (V, R, 10xV, 10xR), comprend plusieurs portes ET (4.1-4.16), qui sont disposées en amont des entrées de compteur (V, R, 10xV, 10xR), et dans lequel les signaux de sortie du deuxième module (3) sont appliqués aux premières entrées des portes ET (4.1-4.16).

22. Circuit selon la revendication 19, dans lequel le troisième module (4) comprend en outre au moins une mémoire intermédiaire (5.2, 5.5, 5.8, 5.11), qui est placée derrière le compteur (5.1, 5.1, 5.7, 5.10) et à laquelle est transmise la position actuelle du compteur, et dans lequel le troisième module (4; 4') comprend en outre un décodeur (5.3, 5.6, 5.9, 5.12), qui est placé derrière la mémoire intermédiaire (5.2, 5.5, 5.8, 5.11) et auquel sont transmises les valeurs de la mémoire intermédiaire.

23. Circuit selon la revendication 17, dans lequel le circuit comprend un quatrième module (2) par l'intermédiaire duquel divers signaux de synchronisation (SYNC2, SYNC4) peuvent être produits, signaux qui synchronisent l'application sélective de signaux aux entrées de compteur (V, R, 10xV, 10xR) au nombre d'au moins deux, lesdits signaux de synchronisation (SYNC2, SYNC4) étant liés aux deuxièmes entrées des portes ET (4.1-4.16).

24. Circuit selon les revendications 21 et 22, dans lequel des signaux de synchronisation (SYNC1, SYNC3) supplémentaires, qui sont transmis à différentes mémoires intermédiaires (5.2, 5.5, 5.8, 5.11), peuvent être produits par le quatrième module (2).

25. Circuit selon la revendication 22, dans lequel un organe de réglage (6.1, 6.2, 6.3, 6.4) est placé derrière le décodeur (5.3, 5.6, 5.9, 5.12), lequel organe de réglage peut être réglé proportionnellement à la position du compteur et est disposé sur le trajet de signal du dispositif de mesure de position, de telle sorte que le paramètre de signal concerné soit régulé à la valeur de consigne prédéfinie.

26. Circuit selon la revendication 25, dans lequel l'organe de réglage (6.1, 6.2, 6.3, 6.4) est conformé en résistance ajustable.
